# EUROPEAN PATENT SPECIFICATION

(11) **EP 3 540 564 B1**
(45) Date of publication and mention of the grant of the patent: **01.05.2024**
(21) Application number: 19162630.8
(22) Date of filing: 13.03.2019
(51) Int. Cl.: G06F 1/3296, G06F 1/3206, G06F 1/3234

(54) **ELECTRONIC DEVICE FOR PROVIDING, VIA DISPLAY, NOTIFICATION OF EVENT OCCURRING IN ELECTRONIC DEVICE IN LOW POWER MODE, AND CONTROL METHOD THEREFOR**
ELEKTRONISCHE VORRICHTUNG ZUR BEREITSTELLUNG ÜBER EINE ANZEIGE EINER BENACHRICHTIGUNG ÜBER EIN IN EINER ELEKTRONISCHEN VORRICHTUNG AUFTRETENDES EREIGNIS IM NIEDERLEISTUNGSMODUS UND STEUERUNGSVERFAHREN DAFÜR
DISPOSITIF ÉLECTRONIQUE PERMETTANT DE FOURNIR, VIA UN ÉCRAN, LA NOTIFICATION D'UN ÉVÉNEMENT SE PRODUISANT DANS UN DISPOSITIF ÉLECTRONIQUE EN MODE FAIBLE PUISSANCE ET SON PROCÉDÉ DE COMMANDE

(30) Priority: 14.03.2018 KR 20180029956
(43) Date of publication of application: 18.09.2019
(73) Proprietor: Samsung Electronics Co., Ltd., Suwon-si, Gyeonggi-do, 16677 (KR)
(72) Inventor: AN, Jungchul, 16677 Suwon-si, Gyeonggi-do, (KR); KIM, Donghui, 16677 Suwon-si, Gyeonggi-do, (KR); BAE, Jongkon, 16677 Suwon-si, Gyeonggi-do, (KR); LEE, Yohan, 16677 Suwon-si, Gyeonggi-do, (KR); HONG, Yunpyo, 16677 Suwon-si, Gyeonggi-do, (KR); KIM, Duhyun, 16677 Suwon-si, Gyeonggi-do, (KR); LEE, Sangseol, 16677 Suwon-si, Gyeonggi-do, (KR); YEOM, Donghyun, 16677 Suwon-si, Gyeonggi-do, (KR); LEE, Soyoung, 16677 Suwon-si, Gyeonggi-do, (KR)
(74) Representative: HGF

(56) References cited:
- WO-A1-2017/175962
- US-A1- 2016 124 491
- US-A1- 2016 349 831
- US-B2- 10 551 903

## Description

### BACKGROUND

### 1. Field

The present disclosure relates to an electronic device that provides, through a display, notification of an event occurring in the electronic device in a low power mode, and a control method therefor.

### 2. Description of Related Art

Various services and additional functions provided through electronic devices, for example, portable electronic devices such as smartphones, are gradually increasing. In order to increase the utility value of such electronic devices and to satisfy the needs of various users, communication service providers or electronic device manufacturers offer various functions and competitively develop electronic devices in order to differentiate them from other companies. Accordingly, various functions provided through electronic devices are becoming more advanced.

WO2017/175962 A1 discloses an electronic device comprising a display; a touch sensor for sensing a touch on at least one point of the display device; and a processor, wherein the processor can be configured to: display an always on display picture on a first region of the display; control the remaining region of the display, except for the first region, in an off-state; control the entire region of the display, in the on-state, when the touch on the first region is sensed; and display, on at least a partial region of the display, the picture related to an object corresponding to the location of the touch.

US2016/349831 A1 discloses an electronic device comprising a battery supplying power to the electronic device, a power management module transferring a first low-voltage interrupt to a processor if a voltage of the battery is lower than or equal to a first voltage, and the processor entering a sleep mode if the first low-voltage interrupt is received from the power management module, wherein the processor ignores other interrupt except an interrupt received from the power management module during the sleep mode. A power managing method of an electronic device, the method comprising generating a first low-voltage interrupt from a power management module if a battery voltage is lower than or equal to a first voltage, entering a sleep mode if the first low-voltage interrupt is generated, and ignoring other interrupts except an interrupt generated from the power management module during the sleep mode.

### SUMMARY

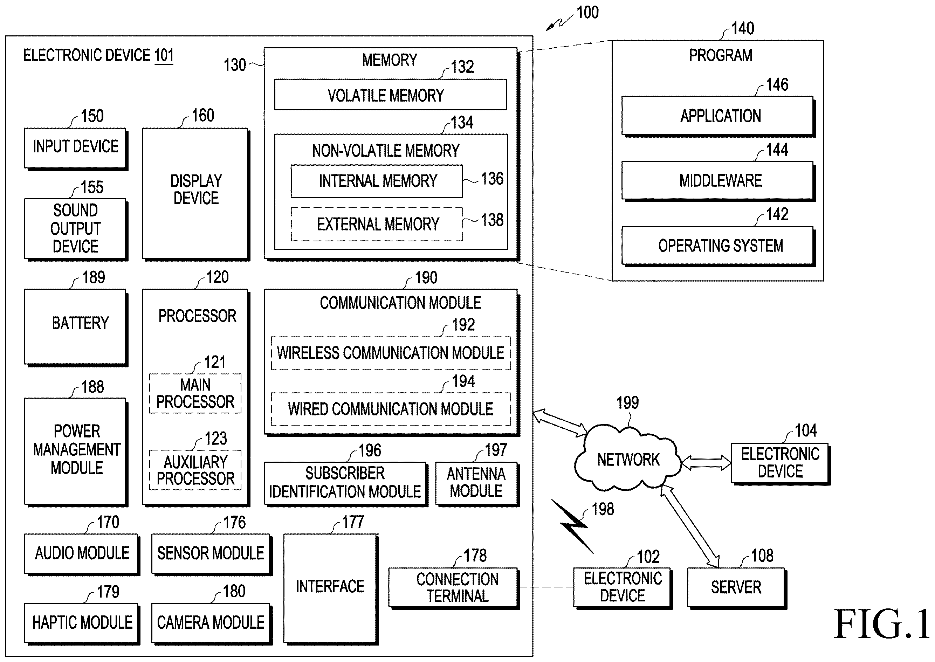

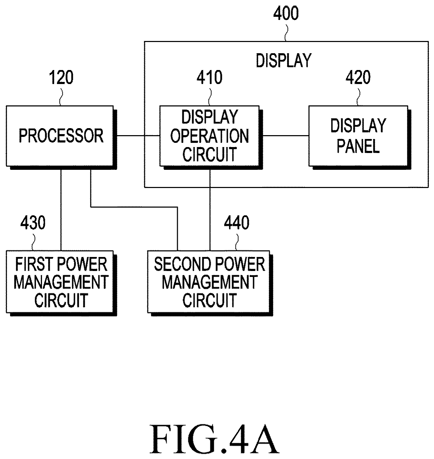

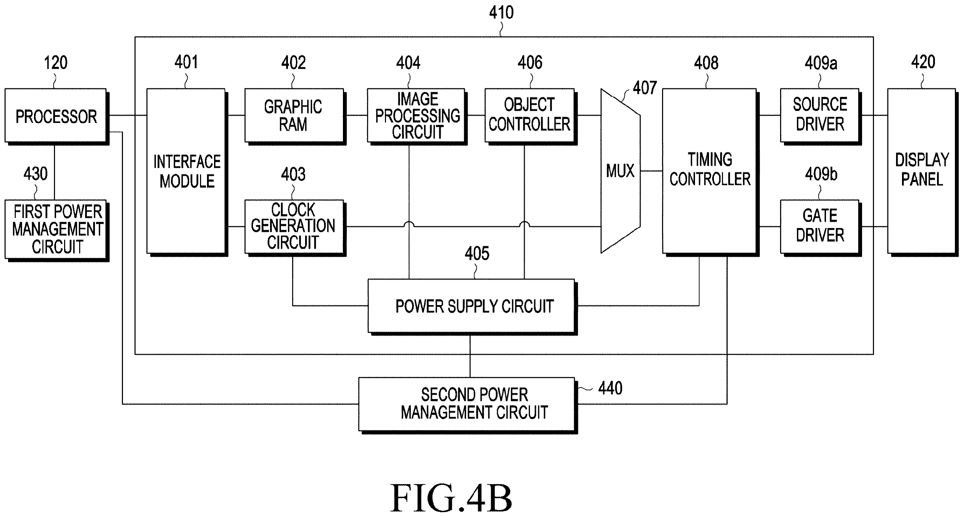

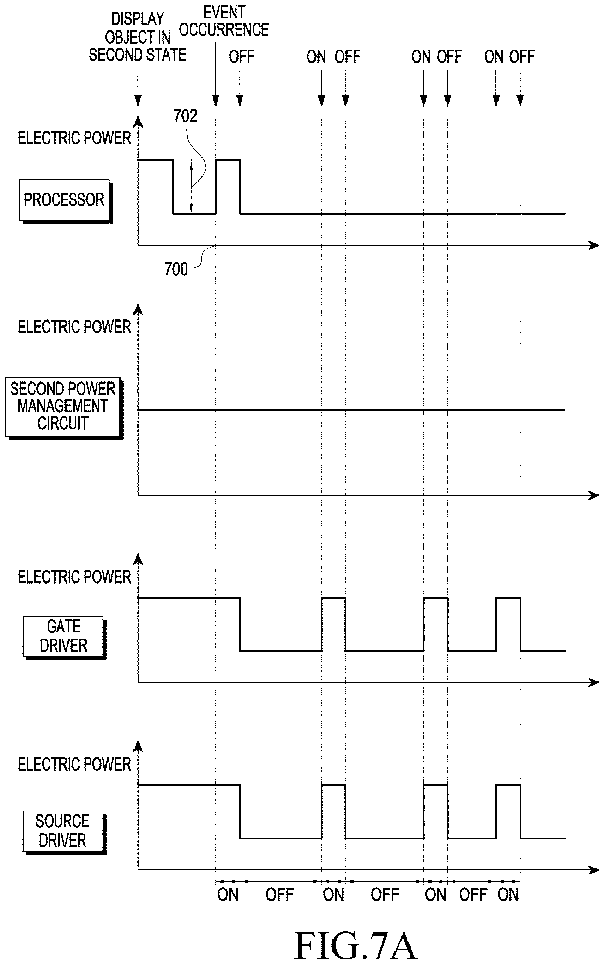

The present invention is defined by the appended claims. Figures 4A, 4B and 7A and the associate passages disclose embodiments of the present invention. Figures 1-3, 5A, 5B, 6A-6E, 8, 9A, 9B, 10, 11A-11D, 12, 13A, 13B, 14A, 14B, 15A and 15B disclose non claimed combination of features, which are nevertheless useful to understand the invention.

Recently, electronic devices, such as smart phones, provide a function of displaying specific information (or a notification) on a display of the electronic device in a standby state (for the convenience of explanation in the present document, it may be referred to as "an always on display (AOD) function") so that a user can easily recognize various events (e.g., call occurrence, reception of a text message, low battery charge, and the like) occurring in the electronic device while the user is not using the electronic device (e.g., a standby state). Even when an electronic device provides an AOD function, the electronic device provides, in duplicate, a function of notifying a user of the occurrence of a specific event (e.g., an occurrence of a missed call, reception of an SNS message, etc.) through a service (SVC) LED (or a notification LED) included in the electronic device. For example, although an electronic device provides a user with a notification that a missing call has occurred, via a specific indicator (e.g., an icon showing a missing call) through an AOD function, the electronic device also provides the user with a notification of the occurrence of the missing call via a service LED (e.g., blue color). Further, in order for an electronic device to provide an AOD function to a user, a large amount of power is required, and thus it does not meet the demand of the user who wants to use the electronic device as long as possible.

According to various examples of the present disclosure, provided is an electronic device that does not include a service LED and is capable of replacing a space, in which the service LED is placed, with other component(s) so as to efficiently utilize the limited mounting space of the electronic device.

According to various examples of the present disclosure, provided is an electronic device capable of providing, as various visual objects, information necessary for a user, even in the case of an electronic device without a service LED, by displaying various objects or notifications on a display of the electronic device in a state in which the electronic device is in a standby state or a power off state.

According to various examples of the present disclosure, provided is an electronic device capable of performing a control when a specific event, such as a missing call, occurs in an electronic device so that a processor switches a state to a low power state, and a display driving circuit of a display (e.g., an object controller) displays a notification for the specific event on the display, so as to reduce power consumption.

According to various examples of the present disclosure, provided is a control method of an electronic device, which may provide, as various visual objects, information necessary for a user even in the case of an electronic device without a service LED, by displaying various objects or notifications on a display of the electronic device in a state in which the electronic device is in a standby state or a power off state.

According to various examples of the present disclosure, a control method of an electronic device, which enables reduction of power consumption, is provided, the method including, when a specific event, such as a missing call, occurs in an electronic device, performing a control so that a processor switches a state to a low power state, and a display driving circuit of a display displays a notification for the specific event on the display.

An electronic device according to various examples of the present disclosure may include: a housing; a display having at least a part thereof exposed and disposed on one surface of the housing; a power management circuit disposed inside the housing; and a processor disposed inside the housing and operably connected to the display and the power management circuit, wherein the processor is configured to: control the display so that the electronic device performs operation based on a first designated scheme during operation in a first designated state; control the display so that the electronic device performs operation based on a second designated scheme corresponding to a second designated state when the occurrence of a first event for switching a state of the electronic device to the second designated state is confirmed; and control the power management circuit so as to receive a voltage lower than a voltage applied to the processor in the first state, and the display is configured to display at least one object in the second designated state, and to change a display state of the at least one object and display the changed display state on the display when information indicating confirmation of the occurrence of a second event with respect to the electronic device is acquired from the processor.

A control method of an electronic device according to various examples of the present disclosure, the method may include: controlling a display of the electronic device so that the electronic device performs operation based on a first designated scheme during operation in a first designated state; controlling the display so that the electronic device performs operation based on a second designated scheme corresponding to a second designated state when the occurrence of a first event for switching a state of the electronic device to the second designated state is confirmed; controlling a power management circuit of the electronic device so as to receive a voltage lower than a voltage supplied to a processor of the electronic device in the first designated state; displaying at least one object on the display in the second designated state; and when information indicating confirmation of the occurrence of a second event with respect to the electronic device is acquired from the processor, changing a display state of the at least one object and displaying the changed display state on the display.

An electronic device according to various examples of the present disclosure may include: a housing; a display having at least a part thereof exposed and disposed on one surface of the housing; a battery disposed inside the housing; a power management circuit disposed inside the housing and connected to the battery; and a processor disposed inside the housing and operably connected to the display, the battery, and the power management circuit, wherein the processor is configured to: as power is supplied from an external electronic device, receive the power from the power management circuit and receive identification information indicating that power is supplied from the external electronic device; provide, to the display, information related to charging of the battery on the basis of the power supplied from the external electronic device; and control the power management circuit so that the processor receives a voltage equal to or lower than a designated voltage from the power management circuit, and the display is configured to display at least one object designated according to a charging state of the battery, on the basis of the provided information related to charging of the battery.

According to various examples of the present disclosure, an electronic device does not include a service LED and therefore is capable of replacing a space, in which the service LED is placed, with other component(s) so as to efficiently utilize a limited mounting space of the electronic device.

According to various examples of the present disclosure, even in the case of an electronic device without a service LED, the electronic device can provide, as various visual objects, information necessary for a user by displaying various objects or notifications on a display of the electronic device in a state where the electronic device is in a standby state or a power off state.

According to various examples of the present disclosure, power consumption can be reduced by performing a control so that a processor switches a state to a low power state, and a display driving circuit of a display displays a notification for a specific event, such as a missing call, on the display in the case in which the specific event occurs in an electronic device.

It is apparent to those skilled in the art that effects according to various embodiments are not limited to the effects described above, and that various effects are inherent in the present disclosure.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely.

Moreover, various functions described below can be implemented or supported by one or more computer programs, each of which is formed from computer readable program code and embodied in a computer readable medium. The terms "application" and "program" refer to one or more computer programs, software components, sets of instructions, procedures, functions, objects, classes, instances, related data, or a portion thereof adapted for implementation in a suitable computer readable program code. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

The above and other aspects, features, and advantages of the present disclosure will be more apparent from the following detailed description taken in conjunction with the accompanying drawings, in which:
FIG. 1 illustrates a block diagram of an electronic device in a network environment according to various embodiments;
FIG. 2 illustrates a block diagram relating to a power management module and a battery according to various embodiments;
FIG. 3 illustrates an exemplary diagram for describing a function of providing a specific notification in a standby state in an electronic device including a service LED;
FIG. 4A illustrates an exemplary diagram for describing an electronic device according to the claimed embodiments of the invention;
FIG 4B illustrates an exemplary diagram for describing a display driving circuit according to the claimed embodiments of the invention;
FIGS. 5A and 5B illustrate exemplary diagrams for describing a method for operating an electronic device according to various embodiments;
FIGS. 6A, 6B, 6C, 6D, and 6E illustrate exemplary diagrams for describing operations for providing a user with a notification of an event occurring in an electronic device in a standby state according to various embodiments;
FIGS. 7A 7B illustrate exemplary diagrams for comparing a case where object display is controlled by a display driving circuit in a standby state with a case where object display is controlled by a processor in a standby state according to the claimed embodiments of the invention at FIG 7A.
FIG. 8 illustrates an exemplary diagram for describing the method for operating an electronic device according to various embodiments;
FIGS. 9A, 9B, and 10 illustrate exemplary diagrams for describing operations for providing a user with a notification of an event occurring in an electronic device in a standby state according to various embodiments;
FIGS. 11A, 11B, 11C, and FIG. 11D illustrate exemplary diagrams for describing operations for providing charging information of an electronic device in a standby state according to various embodiments;
FIG. 12 illustrates an exemplary diagram for describing the method for operating an electronic device according to various embodiments;
FIG. 13A illustrates an exemplary diagram for describing an operation for providing charging completion information when charging of an electronic device has been completed, according to various embodiments;
FIG. 13B illustrates an exemplary diagram for describing a path along which an operation for displaying charging information is controlled during charging of an electronic device according to various embodiments; and
FIGS. 14A, 14B, 15A and 15B illustrate exemplary diagrams for describing the method for operating an electronic device according to various embodiments.

### DETAILED DESCRIPTION

FIGS. 1 through 15B, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged system or device.

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input device 150, a sound output device 155, a display device 160, an audio module 170, a sensor module 176, an interface 177, a haptic module 179, a camera module 180, a power management module 188, a battery 189, a communication module 190, a subscriber identification module (SIM) 196, or an antenna module 197. In some embodiments, at least one (e.g., the display device 160 or the camera module 180) of the components may be omitted from the electronic device 101, or one or more other components may be added in the electronic device 101. In some embodiments, some of the components may be implemented as single integrated circuitry. For example, the sensor module 176 (e.g., a fingerprint sensor, an iris sensor, or an illuminance sensor) may be implemented as embedded in the display device 160 (e.g., a display).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may load a command or data received from another component (e.g., the sensor module 176 or the communication module 190) in volatile memory 132, process the command or the data stored in the volatile memory 132, and store resulting data in nonvolatile memory 134. According to an embodiment, the processor 120 may include a main processor 121 (e.g., a central processing unit (CPU) or an application processor (AP)), and an auxiliary processor 123 (e.g., a graphics processing unit (GPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display device 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the nonvolatile memory 134.

The program 140 may be stored in the memory 130 as software, and may include, for example, an operating system (OS) 142, middleware 144, or an application 146.

The input device 150 may receive a command or data to be used by other component (e.g., the processor 120) of the electronic device 101, from the outside (e.g., a user) of the electronic device 101. The input device 150 may include, for example, a microphone, a mouse, a keyboard, or a digital pen (e.g., a stylus pen).

The sound output device 155 may output sound signals to the outside of the electronic device 101. The sound output device 155 may include, for example, a speaker or a receiver. The speaker may be used for general purposes, such as playing multimedia or playing record, and the receiver may be used for an incoming calls. According to an embodiment, the receiver may be implemented as separate from, or as part of the speaker.

The display device 160 may visually provide information to the outside (e.g., a user) of the electronic device 101. The display device 160 may include, for example, a display, a hologram device, or a projector and control circuitry to control a corresponding one of the display, hologram device, and projector. According to an embodiment, the display device 160 may include touch circuitry adapted to detect a touch, or sensor circuitry (e.g., a pressure sensor) adapted to measure the intensity of force incurred by the touch.

The audio module 170 may convert a sound into an electrical signal and vice versa. According to an embodiment, the audio module 170 may obtain the sound via the input device 150, or output the sound via the sound output device 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connection terminal 178 may include a connector via which the electronic device 101 may be physically connected with the external electronic device (e.g., the electronic device 102). According to an embodiment, the connection terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BLUETOOTH, wireless-fidelity (Wi-Fi) direct, or infrared data association (IrDA)) or the second network 199 (e.g., a long-range communication network, such as a cellular network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., PCB). According to an embodiment, the antenna module 197 may include a plurality of antennas. In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 and 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, or client-server computing technology may be used, for example.

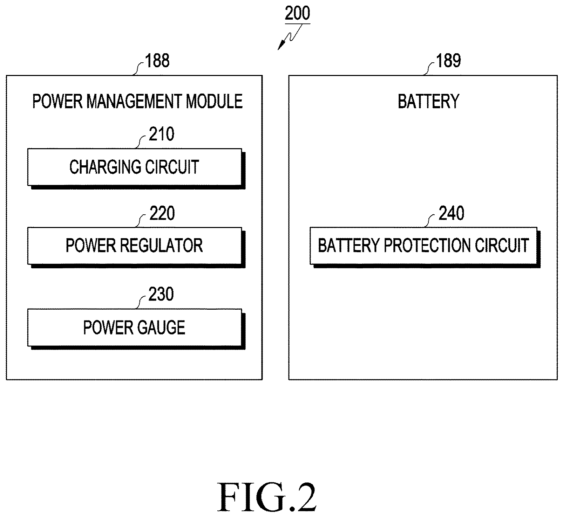

FIG. 2 illustrates a block diagram 200 for a power management module 188 and a battery 189 according to various embodiments. Referring to FIG. 2, the power management module 188 may include a charging circuit 210, a power regulator 220, or a power gauge 230. The charging circuit 210 may charge the battery 189 by using power supplied from an external power supply with respect to the electronic device 101. According to an embodiment, the charging circuit 210 may select a charging scheme (e.g., a normal charge or a fast charge) on the basis of at least a part of an external power supply type (e.g., a power adapter, a USB, or wireless charging), the magnitude (e.g., about 20 watts or more) of power that can be supplied from the external power supply, and attributes of the battery 189, and may charge the battery 189 by using the selected charging scheme. The external power supply may be wired to the electronic device 101, for example, via a connection terminal 178, or may be wirelessly connected to the electronic device 101 via the antenna module 197.

The power regulator 220, for example, may generate a plurality of powers having different voltage or current levels by adjusting a voltage level or a current level of power supplied from the external power supply or the battery 189. The power regulator 220 may adjust the power of the external power supply or the battery 189 to have a voltage or current level appropriate for each of some elements among elements included in the electronic device 101. According to an embodiment, the power regulator 220 may be implemented in a low drop out (LDO) regulator form or a switching regulator form. The power gauge 230 may measure use state information (e.g., a capacity, a charging/discharging frequency, voltage, or temperature of the battery 189) of the battery 189.

The power management module 188, for example, may determine charging state information (e.g., life, overvoltage, low voltage, overcurrent, overcharge, over discharge, overheating, short circuit, or swelling) related to charging of the battery 189 on the basis of at least a part of the measured use state information, using the charging circuit 210, the power regulator 220, or the power gauge 230. The power management module 188 may determine whether the battery 189 is normal or abnormal, on the basis of at least a part of the determined charging state information. When it is determined that a state of the battery 189 is abnormal, the power management module 188 may adjust charging of the battery 189 (e.g., reducing charging current or voltage, or stopping charging). According to an embodiment, at least some functions among functions of the power management module 188 may be performed by an external control device (e.g., the processor (120).

According to an embodiment, at least a part of the use state information or the charging state information of the battery 189 may be measured using the power management module 188, the power gauge 230, or a corresponding sensor (e.g., a temperature sensor) among sensor modules 176. According to an embodiment, the corresponding sensor (e.g., a temperature sensor) among the sensor modules 176 may be included as a part of the battery protection circuit 240, or may be disposed near the battery 189 as a separate device.

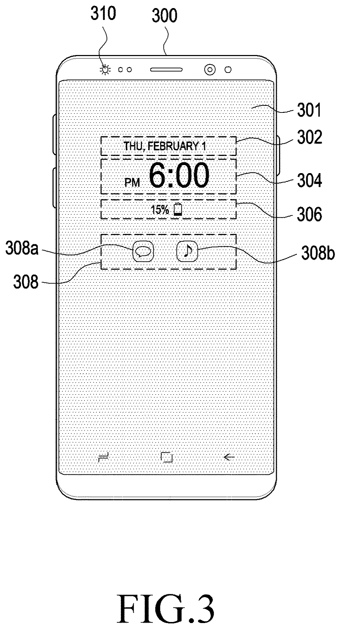

FIG. 3 illustrates an exemplary diagram for describing a function of providing a specific notification in a standby state by a portable device 300 (e.g., a smart phone) including a service LED 310.

Referring to FIG. 3, the portable device 300 including the service LED 310 may provide a notification via the service LED 310 when an event (e.g., reception of an SNS message) occurs. For example, the portable device 300 including the service LED 310 may output light having a predetermined color for a specific application via the service LED 310. The portable device 300 including the service LED 310 may display various objects in a standby state. For example, the portable device 300 including the service LED 310 may display, on a display 301, a first object (e.g., date and day of the week information) 302, a second object (e.g., time information) 303, a third object (e.g., battery residual level information) 306, a fourth object (e.g., a first indicator 308a and a second indicator 308b). As illustrated in FIG. 3, the portable device 300 including the service LED 310 may provide a user with information on the occurrence of an event (e.g., reception of an SNS message) concurrently by means of the service LED 310 and the first indicator 308a according to the occurrence of the event.

FIG. 4A illustrates an exemplary diagram for describing the electronic device 101 according to the claimed embodiments of the invention. Referring to FIG. 4A, the electronic device 101, according to various embodiments of the present disclosure, includes the processor 120, a display driving circuit 410, a display panel 420, and a first power management circuit 430, and optionally a second power management circuit 440. The display driving circuit 410 and the display panel 420, according to various embodiments of the present disclosure, is included in a display 400 (e.g., the display device 160 in FIG. 1).

The processor 120, according to various embodiments of the present disclosure, executes software (e.g., the program 140 in FIG. 1) to control at least one other element (e.g., the display driving circuit 410, the display panel 420, the first power management circuit 430, and optionally a second power management circuit 440) of the electronic device 101, which is connected to the processor 120, and may perform a variety of data processing or calculation.

The display driving circuit 410, according to various embodiments of the present disclosure, may receive image data to be output through the display panel 420 from the processor 120. The display driving circuit 410, according to various embodiments of the present disclosure, may output an image in units of frames through the display panel 420 by using the received image data. The display driving circuit 410, according to various embodiments of the present disclosure, may be operably connected to the second power management circuit 440. The display driving circuit 410, according to various embodiments of the present disclosure, may control the second power management circuit 440. The display driving circuit 410, according to various embodiments of the present disclosure, may output (e.g., display) at least one object by using the display panel when the electronic device (e.g., the processor 120) is in a standby state. In the present disclosure, the "standby state" may refer to a state in which only a designated application or module necessary for operating the electronic device 101 is operable with the processor 120. The "standby state", according to various embodiments of the present disclosure, may include a state in which a predetermined voltage (e.g., about 30% (or a low voltage) of an allowable voltage applied to the processor 120 at maximum) is applied to the processor 120. In the "standby state" according to various embodiments of the present disclosure, when the processor 120 performs a specific function, some functions or operations (e.g., of the display 400 (e.g., the display device 160 in FIG. 1)) requiring a predetermined power consumption (or voltage or current) or more may not be controllable. In the present disclosure, the term "a standby state" may refer to a state in which voltage is being applied, the voltage reduced by a specified ratio compared to an average voltage of a state (e.g., an active state) in which the electronic device 101 provides a variety of functions according to a user input. Information on the specific ratio and the average voltage, according to various embodiments of the present disclosure, may be pre-stored in the electronic device 101. The expression "a standby state" mentioned in the present disclosure may be used in place of various expressions, such as "a sleep state", "a standby mode", "a sleep mode", "a low power state" or the like.

According to various embodiments of the present disclosure, entering (switching) from an active state to a standby state may be performed by, for example, a user input (e.g., pressing a power on/off button). According to various embodiments of the present disclosure, entering (switching) from a standby state to an active state may be performed by, for example, a user input (e.g., pressing a power on/off button). In the standby state according to various embodiments of the present disclosure, the processor 120 and/or the display driving circuit 410 may display a designated screen (e.g., a block screen) on the display panel 420. In the standby state according to various embodiments of the present disclosure, the processor 120 and/or the display driving circuit 410 may display a designated screen by displaying, in black, a color of a screen currently being displayed on the display panel 420. In the standby state according to various embodiments of the present disclosure, the processor 120 and/or the display driving circuit 410 may display a designated screen by displaying a black screen on an upper layer of the screen currently being displayed. In the standby state according to various embodiments of the present disclosure, the processor 120 and/or the display driving circuit 410 may generate the same visual effect as that of the case of displaying a designated screen, by turning off the screen displayed on the display panel 420. In the present disclosure, for the convenience of explanation, an operation state in a standby state of the display 400 (e.g., the display device 160 in FIG. 1) is described by the expression "a standby screen is displayed", but this is exemplary.

According to various embodiments of the present disclosure, the display panel 420 may include at least one among a liquid crystal display (LCD) display, a light-emitting diode (LED) display, an organic light-emitting diode (OLED) display, a microelectromechanical systems (MEMS) display, and an electronic paper display. The display panel 420, according to various embodiments of the present disclosure, may be implemented as a flexible display or a foldable display. The display panel 420, according to various embodiments of the present disclosure, may be extended or bent by a force externally applied thereto. The display panel 420, according to various embodiments of the present disclosure may, display various objects (e.g., texts, images, videos, icons, symbols, or the like).

The first power management circuit 430 and the second power management circuit 440, according to various embodiments of the present disclosure, may manage power supplied to various elements of the electronic device 101. The first power management circuit 430, according to various embodiments of the present disclosure, may be operably connected to the processor 120. The first power management circuit 430, according to various embodiments of the present disclosure, may manage power (or voltage or current) supplied to the processor 120. The second power management circuit 440, according to various embodiments of the present disclosure, may be operably connected to the processor 120 and the display driving circuit 410. The second power management circuit 440, according to various embodiments of the present disclosure, may manage power (or voltage or current) supplied to the display 400 (e.g., the display device 160 in FIG. 1). The first power management circuit 430 and the second power management circuit 440, according to various embodiments of the present disclosure, may be connected to a battery (not illustrated). The first power management circuit 430 and the second power management circuit 440, according to various embodiments of the present disclosure, may be implemented as an individual chip. The first power management circuit 430 and the second power management circuit 440, according to various embodiments of the present disclosure, may be implemented as a single chip. The first power management circuit 430 and the second power management circuit 440, according to various embodiments of the present disclosure, may be implemented as a part of a PMIC.

FIG. 4B illustrates an exemplary diagram for describing the display driving circuit 410 according to the claimed embodiments of the invention. Referring to FIG. 4B, the display driving circuit 410, according to various embodiments of the present disclosure, includes a source driver 409a and a gate driver 409b and optionally an interface module 401, a graphic RAM 402, a clock generation circuit 403, an image processing circuit 404, a power supply circuit 405, an object controller 406, a multiplexer (MUX) 407 and a timing controller 408.

The interface module 401, according to various embodiments of the present disclosure, may receive image data and/or a control signal from the processor 120. The interface module 401 may include a high speed serial interface (HiSSI) module and/or a low speed serial interface (LoSSI) module. The high speed serial interface module, according to various embodiments of the present disclosure, may include a mobile industry processor interface (MIPI), a mobile display digital interface (MDDI), a compact display port (CDP), a mobile pixel link (MPL), current mode advanced differential signaling (CMADS), and the like. The high speed serial interface module, according to various embodiments of the present disclosure, may include a hardware module supporting MIPI, MDDI, CDP, MPL and/or CMADS. The low speed serial interface module, according to various embodiments of the present disclosure, may include a serial peripheral interface (SPI) and/or an inter-integrated circuit (I2C). The low speed serial interface module, according to various embodiments of the present disclosure, may include a hardware module supporting, SPI and/or I2C.

The graphics RAM 402, according to various embodiments of the present disclosure, may store image data provided from the processor 120. The graphics RAM 402, according to various embodiments of the present disclosure, may store resolution information of the display panel 420. The graphics RAM 402, according to various embodiments of the present disclosure, may include a frame buffer or a line buffer.

The clock generation circuit 403, according to various embodiments of the present disclosure, may generate a periodic timing signal. The display driving circuit 410 (e.g., the object controller 406), according to various embodiments of the present disclosure, may perform the calculation in units of seconds on the basis of a signal generated by the clock generation circuit 403. The display driving circuit 410 (e.g., the object controller 406), according to various embodiments of the present disclosure, may perform designated calculation (e.g., checking a battery charging state) according to the signal generated by the clock generation circuit 403, on the basis of a specific time point (e.g., a time point at which data provided from the processor 120 is stored in a memory of the object controller 406).

The image processing circuit 404, according to various embodiments of the present disclosure, may process image data stored in the graphics RAM 402 or in the memory of the object controller 406. The image processing circuit 404 may convert the image data stored in the graphics RAM 402 or in the memory of the object controller 406 into an image. The image processing circuit 404, according to various embodiments of the present disclosure, may include a pixel data processing circuit, a pre-processing circuit, a gating circuit, and/or the like.

The power supply circuit 405, according to various embodiments of the present disclosure, may be operably connected to the second power management circuit 440 (e.g., a display PMIC). The power supply circuit 405, according to various embodiments of the present disclosure, may receive power from the second power management circuit 440. The power supply circuit 405, according to various embodiments of the present disclosure, may supply (or distribute) power to at least one element of the display driving circuit 410.

The object controller 406, according to various embodiments of the present disclosure, may control the display panel 420 when the electronic device (e.g., the processor 120) is in the standby state. The object controller 406, according to various embodiments of the present disclosure, may display at least one object on the display panel 420. The object controller 406, according to various embodiments of the present disclosure, may change a display state (e.g., flicker, color change, etc.) of at least one object displayed on the display panel 420 when the electronic device (e.g., the processor 120) is in a standby state. The object controller 406, according to various embodiments of the present disclosure, may include a memory (not illustrated) in which at least one object is stored. The electronic device (e.g., the processor 120 in FIG. 4A or a GPU) may generate image data for at least one object, and may transmit the generated image data to the display (e.g., the display driving circuit 410 in FIG. 4A). According to various embodiments of the present disclosure, the image data transmitted from the processor 120 may be stored in the object controller 406 and/or the graphics RAM 402. The object controller 406, according to various embodiments of the present disclosure, may be referred to as a term "an object generator".

The multiplexer 407, according to various embodiments of the present disclosure, may combine signals output from the clock generation circuit 403 and the object controller 406, and may transmit the combined signal to the timing controller 408.

The timing controller 408, according to various embodiments of the present disclosure, may generate a data control signal for controlling of operation timing of the source driver 409a and a gate control signal for controlling of operation timing of the gate driver 409b, on the basis of the signal combined by the multiplexer 407. The timing controller 408, according to various embodiments of the present disclosure, may control the second power management circuit 440 when the electronic device (e.g., the processor 120) is in the standby state. The timing controller 408, according to various embodiments of the present disclosure, may transmit, to the second power management circuit 440, a control signal for allowing the display driving circuit 410 to receive power supplied through the second power management circuit 440.

The source driver 490a and the gate driver 409b, according to various embodiments of the present disclosure, may generate signals output to a scan line and a data line of the display panel 420, on the basis of the source control signal and the gate control signal received from the timing controller 408, respectively.

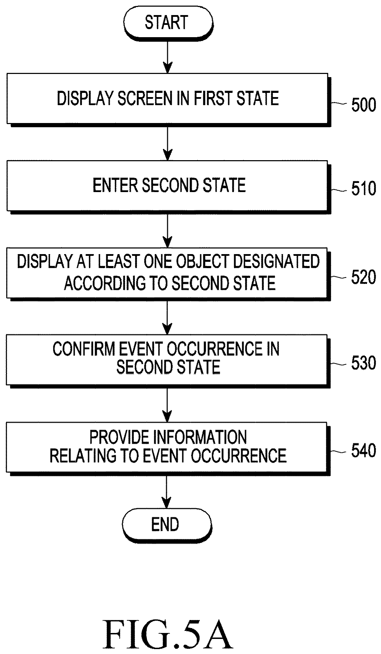

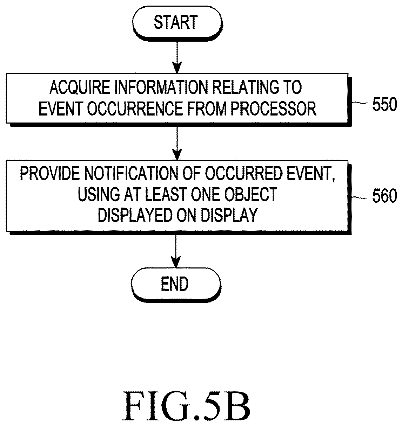

FIGS. 5A 5B illustrate exemplary diagrams for describing a method for operating an electronic device according to various embodiments. FIG. 5A illustrates an exemplary diagram performed by a processor (e.g., the processor 120 in FIG, 4A) from among various embodiments of the present disclosure. FIG. 5B illustrates an exemplary diagram performed by a display (e.g., the display driving circuit 410 in FIG, 4A) from among various embodiments of the present disclosure.

Referring to FIG. 5A, a method for operating an electronic device (e.g., the electronic device 101 in FIG. 1), according to various embodiments of the present disclosure, may include displaying, by the electronic device (e.g., the processor 120 in FIG. 4A), a screen in a first state by means of the display (e.g., the display 400 in FIG. 4A, or the display device 160 in FIG. 1), in operation 500. The first state, according to various embodiments of the present disclosure, may refer to a state in which the voltage required by the processor (e.g., the processor 120 in FIG. 4A) may be provided so that the processor (e.g., the processor 120 in FIG. 4A) may perform all the various operations. The screen displayed in the first state, according to various embodiments of the present disclosure, may include a home screen or an execution screen of a specific application.

The method for operating the electronic device (e.g., the electronic device 101 in FIG.1), according to various embodiments of the present disclosure, may include entering a second state of the electronic device (e.g., the processor 120 in FIG. 4A), in operation 510. For example, operation 510, according to various embodiments of the present disclosure, may include receiving an input for switching to the second state of the electronic device (e.g., the processor 120 in FIG. 4A). According to various embodiments of the present disclosure, an input for switching to the second state may include, for example, an input of pressing the power on/off button of the electronic device. According to various embodiments of the present disclosure, an input for switching to the second state may include an input of touching a switching menu displayed on a touch screen. The second state, according to various embodiments of the present disclosure, may include a standby mode. The electronic device (e.g., the electronic device 101 in FIG. 1), according to various embodiments of the present disclosure, may enter the second state after a designated amount of time has elapsed.

The method for operating the electronic device (e.g., the electronic device 101 in FIG. 1), according to various embodiments of the present disclosure, may include displaying at least one designated object on the display (e.g., a standby screen), on the basis of switching of the electronic device (e.g., the processor 120 in FIG. 4A) to the second state, in operation 520. According to various embodiments of the present disclosure, function(s) performed in operation 520 may be referred to as an AOD function.

The method for operating the electronic device (e.g., the electronic device 101 in FIG. 1), according to various embodiments of the present disclosure, may include checking, by the electronic device (e.g., the processor 120 in FIG. 4A), the occurrence of an event (e.g., reception of an SNS message) in the second state, in operation 530.

The method for operating the electronic device (e.g., the electronic device 101 in FIG. 1), according to various embodiments of the present disclosure, may include providing, by the electronic device (e.g., the processor 120 in FIG. 4A), information relating to the occurrence of the event to the display (e.g., the object controller 406 in FIG. 4B), in operation 540. According to various embodiments of the present disclosure, even when the electronic device (e.g., the processor 120 in FIG. 4A) is in the standby state, a communication channel with the display (e.g., the object controller 406 in FIG. 4B) may be maintained. Alternatively, according to various embodiments of the present disclosure, the communication channel with the display (e.g., the object controller 406 in FIG. 4B) may not be maintained. In this case, the electronic device (e.g., the processor 120 in FIG. 4A) may receive power for a designated amount of time, and may perform wake-up. The processor (e.g., the processor 120 in FIG. 4A), according to various embodiments of the present disclosure, may provide information relating to the occurrence of an event in a wake-up state to the display (e.g., the object controller 406 in FIG. 4B). Thereafter, the processor (e.g., the processor 120 in FIG. 4A) may be switched back to the standby state after a designated amount of time elapses.

Referring to FIG. 5B, the method for operating the electronic device (e.g., the electronic device 101 in FIG. 1), according to various embodiments of the present disclosure, may include acquiring, by an electronic device (e.g., the display 400 in FIG. 4A and/or the display device 160 in FIG. 1), information relating to the occurrence of an event with respect to the electronic device (e.g., the processor 120 in FIG. 4A) from a processor (e.g., the processor 120 in FIG. 4A), in operation 550.

The method for operating the electronic device (e.g., the electronic device 101 in FIG. 1), according to various embodiments of the present disclosure, may include providing, by the electronic device (e.g., the display 400 in FIG. 4A and/or the display device 160 in FIG. 1), a notification of the occurred event by using at least one object displayed on the display (e.g., the display 400 in FIG. 4A and/or the display device 160 in FIG. 1), in operation 560. For example, the display 400 (e.g., the display device 160 in FIG. 1) may provide a notification of the occurred event by changing at least one object displayed on the display 400 (e.g., the display device 160 in FIG. 1).

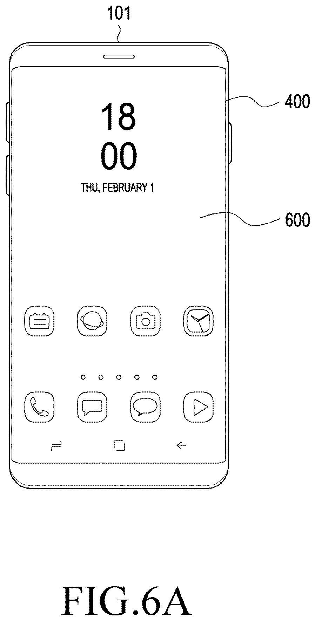

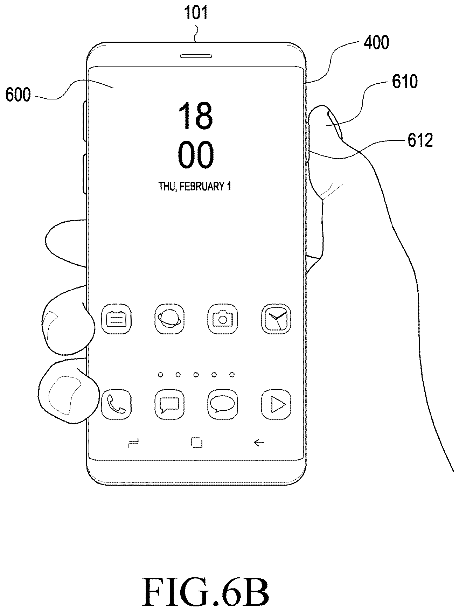

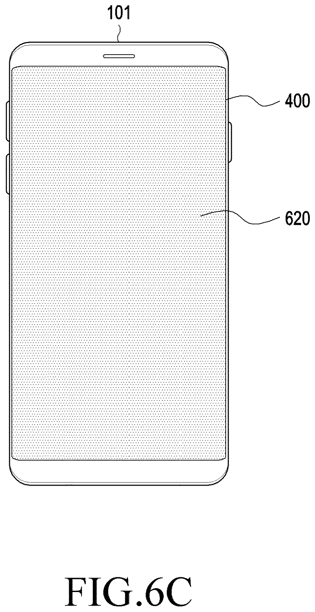

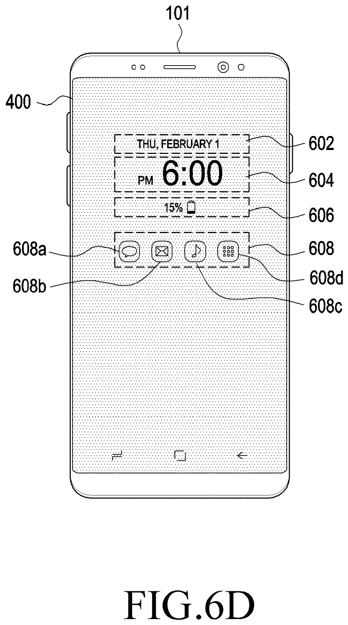

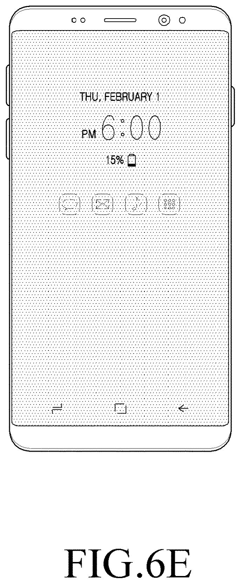

FIGS. 6A, 6B, 6C, 6D, and FIG. 6E illustrate exemplary diagrams for describing operations for providing a user with a notification of an event occurring in an electronic device (e.g., the electronic device 101 in FIG. 1) in a standby state, according to various embodiments.

Referring to FIG. 6A, the electronic device 101, according to various embodiments of the present disclosure, may display a first screen 600 (e.g., a home screen) on the display 400 (e.g., the display device 160 in FIG. 1). The electronic device 101, according to various embodiments of the present disclosure, may not include a service LED (e.g., the service LED 310 in FIG. 3). The electronic device 101, according to various embodiments of the present disclosure, may display the first screen 600 in a first state. In other words, the electronic device 101, according to various embodiments of the present disclosure, may operate the display 400 (e.g., the display device 160 in FIG. 1) in the first state according to a first designated scheme.

Referring to FIG. 6B, the electronic device 101, according to various embodiments of the present disclosure, may detect pressing of a first button 612 for switching to the second state, in a state in which the first screen 600 is displayed. The first button 612, according to various embodiments of the present disclosure, may include, for example, the power on/offbutton of the electronic device 101, but may not be limited thereby.

Referring to FIG. 6C, the electronic device 101, according to various embodiments of the present disclosure, may display a second screen 620 according to switching to the second state. The second screen 620, according to various embodiments of the present disclosure, may include a standby screen (e.g., a black screen).

Referring to FIG. 6D, the electronic device 101, according to various embodiments of the present disclosure, may display at least one object on the second screen 620. FIG. 6D may be referred to as an AOD function according to various embodiments. At least one object, according to various embodiments of the present disclosure, may include a fifth object (e.g., date and day of the week information) 602, a sixth object (e.g., time information) 604, a seventh object (e.g., battery residual level information) 606, an eighth object (e.g., a third indicator 608a, a fourth indicator 608b, a fifth indicator 608c, and/or a sixth indicator 608d) 608. Image data relating to the at least one object, according to various embodiments of the present disclosure, may be generated by a processor (e.g., the processor 120 in FIG. 2A) or a GPU (not illustrated). The image data relating to the at least one object, according to various embodiments of the present disclosure, may be transmitted to the display (e.g., the display driving circuit 410 in FIG. 2A) when the electronic device 101 receives a request for switching from the first state to the second state. Alternatively, at a time point when a user makes a selection (setting the AOD function to be turned on) so that at least one object is displayed in the second state, the image data relating to the at least one object may be transmitted to the display (e.g., the display driving circuit 410 in FIG. 2A). According to various embodiments of the present disclosure, the image data relating to the at least one object may be transmitted to the display (e.g., the display driving circuit 410 in FIG. 2A) at a variety of time points.

Referring to FIG. 6E, the electronic device 101 (e.g., the object controller 406 in FIG. 4B), according to various embodiments of the present disclosure, may check the occurrence of an event with respect to the electronic device 101 while at least one object (the fifth object 602, the sixth object 604, the seventh object 606, and the eighth object 608) is being displayed on the standby screen. The electronic device 101 (e.g., the object controller 406 in FIG. 4B), according to various embodiments of the present disclosure, may control at least one object (the fifth object 602, the sixth object 604, the seventh object 606, and the eighth object 608) to flicker in order to provide a user with a notification of the occurrence of an event. In FIG. 6E, flickering of the at least one object (the fifth object 602, the sixth object 604, the seventh object 606, and the eighth object 608) may be represented by a dotted line or a thin line.

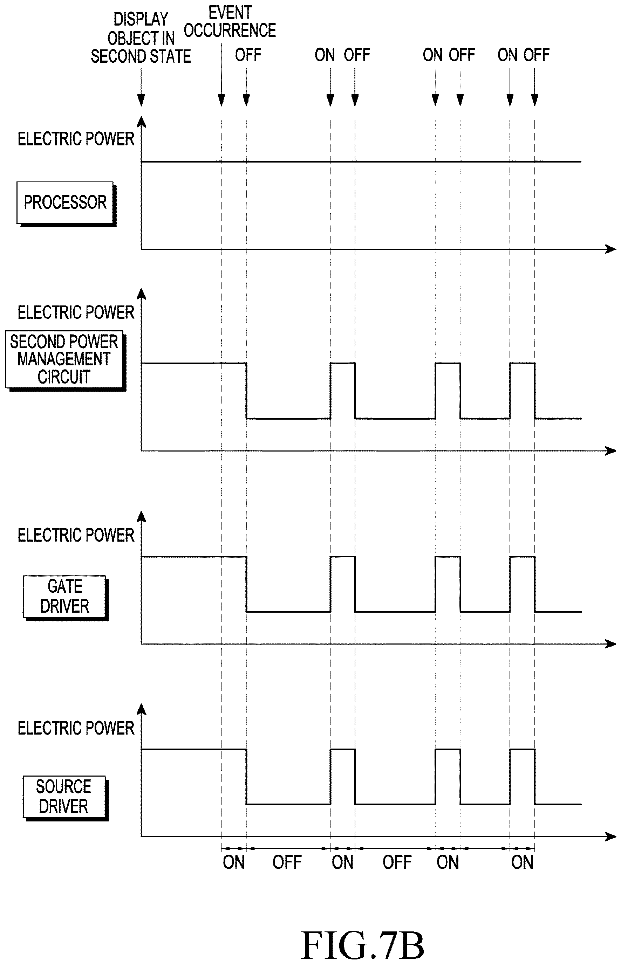

FIGS. 7A and 7B illustrate exemplary diagrams, according the claimed embodiments of the invention for FIG. 7A, for comparing the case in which a display driving circuit (e.g., the display driving circuit 410 in FIG. 4A) controls display of an object in a standby state with the case in which a processor (e.g., the processor 120 in FIG. 4A) controls display of an object in the standby state.

Referring to FIG. 7A, the power consumption of the processor (e.g., the processor 120 in FIG. 4A), according to various embodiments of the present disclosure, may increase in the case of requesting the display (e.g., the display 400 in FIG. 4A and/or the display device 160 in FIG. 1) to display at least one object in the standby screen and in the case of transmitting, to the display (e.g., the display 400 in FIG. 4A and/or the display device 160 in FIG. 1), notification information indicating the occurrence of an event when the event has occurred, and may maintain a low power state (e.g., the standby state) otherwise. When at least one object is displayed in a standby screen and after a designated amount of time elapses (e.g., a time point 700), the processor (e.g., the processor 120 in FIG. 4A) enters the standby state, and the power consumption of the processor (e.g., the processor 120 in FIG. 4A) is reduced 702. According to the claimed embodiments of the invention, since the display driving circuit (e.g., the display driving circuit 410 in FIG. 4A) controls display of at least one object in the standby state, the power consumption of the processor (e.g., the processor 120 in FIG. 4A) is reduced so that, as a result, the power consumption of the overall system is reduced. The power consumption of a second power management circuit (e.g., the second power management circuit 440 in FIG. 4A), according to various embodiments of the present disclosure, may be continuously maintained after displaying an object in the second state. The power consumption of a gate driver (e.g., the gate driver 409b in FIG. 4B) and the power consumption of a source driver (e.g., the source driver 409a in FIG. 4B), according to the claimed embodiments of the invention, decreases upon display of at least one object on the standby screen. In FIG, 7A, for the convenience of explanation, in accordance with the flickering of an object, the case in which at least one object is displayed on the standby screen is represented by "ON", and the case in which at least one object is not displayed on the standby screen is represented by "OFF".

Referring to FIG. 7B, when a processor (e.g., the processor 120 in FIG. 4A) controls displaying at least one object in the standby state, the power consumption of the processor (e.g., the processor 120 in FIG. 4A) may be maintained constant. Likewise, when the processor directly controls an object displayed on the standby screen, the power consumption of the overall system may increase, as a result, compared to the case in which a display driving circuit (e.g., the display driving circuit 410 in FIG. 4A) controls displaying an object in the standby state. The power consumption of a second power management circuit (e.g., the second power management circuit 440 in FIG. 4A), the power consumption of a gate driver (e.g., the gate driver 409b in FIG. 4B), and the power consumption of a source driver (e.g., the source driver 409a in FIG. 4B), according to various embodiments of the present disclosure, may increase or decrease upon display (e.g., flickering) of at least one object on the standby screen.

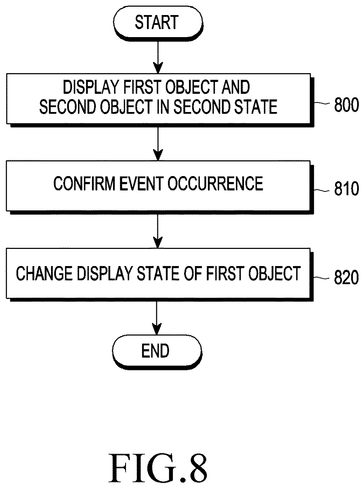

FIG. 8 illustrates an exemplary diagram for describing the method for operating an electronic device according to various embodiments;

Referring to FIG. 8, an electronic device (e.g., the processor 120 in FIG. 4A), according to various embodiments of the present disclosure, may display a first object and a second object in the second state, using a display (e.g., the display 400 in FIG. 4A and/or the display device 160 in FIG. 1), in operation 800.

The electronic device (e.g., the processor 120 in FIG. 4A), according to various embodiments of the present disclosure, may check the occurrence of an event in operation 810.

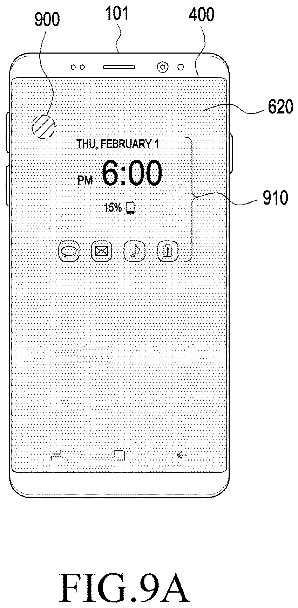

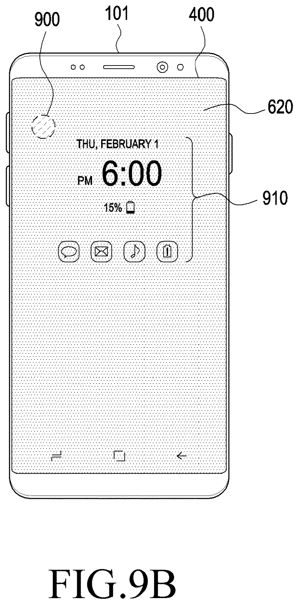

An electronic device (e.g., the object controller 406 in FIG. 4A), according to various embodiments of the present disclosure, may change only a display state of the first object in operation 820. For FIG. 8 in the present application, descriptions will be provided hereinafter in relation to FIG. 9A and FIG. 9B in the present application.

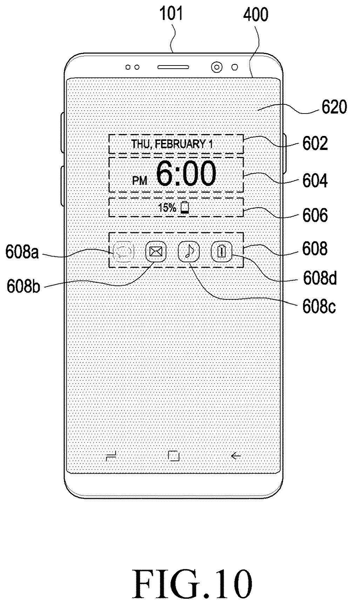

FIGS. 9A, 9B, and 10 illustrate exemplary diagrams for describing operations for providing a user with a notification of an event occurring in an electronic device in a standby state according to various embodiments. FIG. 9A and FIG. 9B illustrate examples relating to various embodiments of the present disclosure, which have been described in relation to FIG. 8. FIG. 10 illustrates an embodiment in which indication displayed in the second screen 620 is controlled to flicker.

Referring to FIG. 9A, the electronic device 101 (e.g., the processor 120 in FIG. 4A), according to various embodiments of the present disclosure, may display a first object 900 and a second object 910 on the display 400 (e.g., the display device 160 in FIG. 1). In FIG. 9A, for the convenience of explanation, a plurality of objects are collectively described in an expression, such as "the second object 910". The first object 900, according to various embodiments of the present disclosure, may include a circular (not limited thereto) graphical object. The first object 900, according to various embodiments of the present disclosure, may be displayed at the upper left of the second screen 620, but this is exemplary. The first object 900, according to various embodiments of the present disclosure, may have a variety of colors. According to various embodiments of the present disclosure, the first object 900 may not be displayed with the second object 910.

Referring to FIG. 9B, the electronic device 101 (e.g., the object controller 406 in FIG. 4B), according to various embodiments of the present disclosure, may newly display the first object 900 when information indicating that an event has occurred is acquired from a processor (e.g., the processor 120 in FIG. 4A). According to various embodiments of the present disclosure, the newly displayed first object 900 may be displayed so as to flicker based on a predetermined period. According to various embodiments of the present disclosure, only a display state of the first object 900 having already been displayed may be changed (e.g., flickered). In FIG. 9B, the flickering of the first object 900 is represented by a dotted line. The electronic device 101 (e.g., the object controller 406 in FIG. 4B), according to various embodiments of the present disclosure, may provide a user with a visual effect of flickering the first object 900 in a scheme of covering only the first object 900 with a black screen. The electronic device 101 (e.g., the object controller 406 in FIG. 4B), according to various embodiments of the present disclosure, may provide a user with a visual effect of flickering the first object 900 in a scheme of changing a pixel value of the first object 900 to have the same pixel value as that of the second object 910 according to a predetermined period.

Referring to FIG. 10, in the second screen 620 according to various embodiments of the present disclosure, the eighth object 608 (e.g., the third indicator 608a, the fourth indicator 608b, a fifth indicator 608c, and a sixth indicator 608d) may be displayed. The electronic device (e.g., the object controller 406 in FIG. 4B), according to various embodiments of the present disclosure, may control only one indicator (e.g., the third indicator 608a) to flicker. The third indicator 608a, according to various embodiments of the present disclosure, may include a representative icon for a chatting application related to SNS. When an input (e.g., a touch input) of selecting the representative icon is received, the electronic device 101, according to various embodiments of the present disclosure, may display an execution screen of an application corresponding to the selection on the display 400 (e.g., the display device 160 in FIG. 1). According to various embodiments of the present disclosure, the descriptions provided in FIG. 9B may be applied to the operation of the electronic device (e.g., the object controller 406 in FIG. 4B), which causes only one indicator (e.g., the third indicator 608a) to flicker. In FIG. 10 flickering is represented by a dotted line.

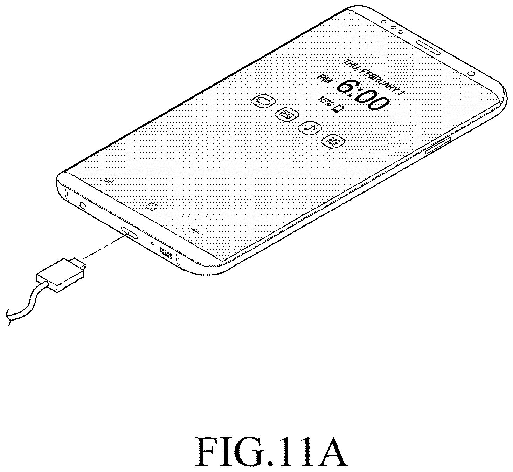

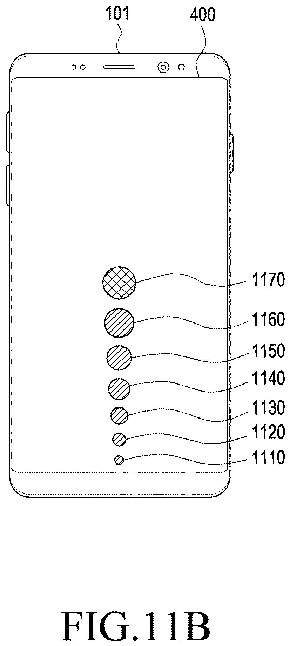

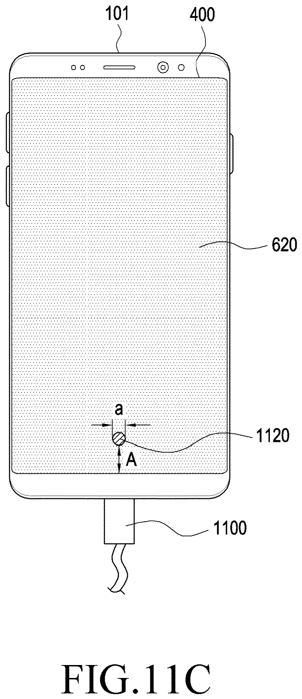

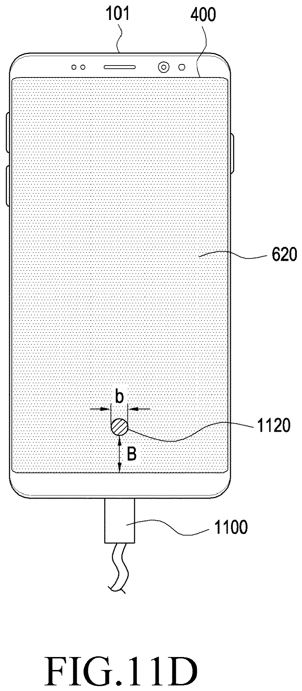

FIGS. 11A, 11B, 11C, and FIG. 11D illustrate exemplary diagrams, according to various embodiments, for describing operations for providing charging information of an electronic device (e.g., the electronic device 101 in FIG. 1) in a standby state. An event, according to various embodiments of the present disclosure, may include an event for charging the electronic device 101 (briefly, referred to as a charging event). The charging event according to various embodiments of the present document may include at least one of wireless charging and wired charging schemes. For the convenience of explanation, FIG. 11A and FIG. 11B illustrates the case in which a charging event has occurred in a standby state, but at least a part of descriptions provided in FIG. 11A and FIG. 11B may also be applied to the case in which the charging event occurs when power of the electronic device 101 is turned off.

Referring to FIG. 11A, the electronic device 101 (e.g., the processor 120 in FIG. 4A), according to various embodiments of the present disclosure, may display the second screen 620 on the display 400 (e.g., the display device 160 in FIG. 1) in the second state. The electronic device 101, according to various embodiments of the present disclosure, may check (e.g., detect) connection to an external device (e.g., a charging terminal 1100) for charging the electronic device 101. In the second screen according to various embodiments of the present disclosure, at least one object (e.g., the fifth object 602, the sixth object 604, the seventh object 606, and the eighth object 608) may be displayed.

Referring to FIG. 11B, objects 1110, 1120, 1130, 1140, 1150, 1160, and 1170 displayed on the display 400 (e.g., the display device 160 of FIG. 1) according to a battery charging rate (or a battery residual amount) are illustrated. The display driving circuit (e.g., the object controller 460 in FIG. 4B), according to various embodiments of the present disclosure, may display the objects 1110, 1120, 1130, 1140, 1150, 1160, and 1170 having different sizes and various shapes, wherein the distances of the objects from the lower end part of the display 400 (e.g., the display device 160 in FIG. 1) of the electronic device 101 are different from each other depending on the battery charging rate (or a battery residual amount). According to various embodiments of the present disclosure, a ninth object 1110 may indicate a case in which a battery residual amount is equal to or less than about 10%, a tenth object 1120 may indicate a case in which the battery residual amount exceeds about 10% or is equal to or less than about 30%, the eleventh object 1130 may indicate a case in which the battery residual amount exceeds about 30% or is equal to or less than about 50%, the twelfth object 1140 may indicate a case in which the battery residual amount exceeds about 50% or is equal to or less than about 70%, the thirteenth object 1150 may indicate a case in which the battery residual amount exceeds about 70% or is equal to or less than about 90%, the fourteenth object 1160 may indicate a case in which the battery residual amount exceeds about 90% or is less than about 100%, and the fifteenth object 1170 may indicate a case in which the battery residual amount is about 100%. As illustrated in FIG. 11B, image data for various objects 1110, 1120, 1130, 1140, 1150, 1160, and 1170 may be stored in a display driving circuit (e.g., the object controller 406 or the graphics RAM 402 in FIG. 4B), or may be stored in a memory (e.g., the memory 130 in FIG. 1).

Referring to FIG. 11C, the electronic device 101 (e.g., the processor 120 in FIG. 4A), according to various embodiments of the present disclosure, may check the connection to a charging terminal 1100 for the electronic device 101. The electronic device 101 (e.g., the processor 120 in FIG. 4A), according to various embodiments of the present disclosure, may acquire, from a power management circuit (e.g., the first power management circuit 430), identification information indicating that an external device (e.g., an external power supply) has been connected. The electronic device 101 (e.g., the processor 120 in FIG. 4A), according to various embodiments of the present disclosure, may temporarily switch (or wake up) the second state to the first state upon acquiring the identification information indicating that the external device (e.g., an external power supply) has been connected. The identification information, according to various embodiments of the present disclosure, may include a wake-up signal for a processor (e.g., the processor 120 in FIG. 4A). The charging terminal 1100, according to various embodiments of the present disclosure, may be connected via a connector (e.g., a USB 3.1 type) of the electronic device 101.

When connection to the charging terminal 1100 is confirmed, the processor 120, according to various embodiments of the present disclosure, may transmit, to a display (e.g., the object controller 460 in FIG. 4B), the identification information indicating that the charging terminal 1100 is connected to the electronic device 101. The display 400 (e.g., the object controller 460 of FIG. 4B) according to various embodiments of the present document may display an object (e.g., the tenth object 1120) corresponding to a current battery residual amount (e.g., a percentage) on the second screen 620. The display 400 (e.g., the object controller 406 in FIG. 4B) according to various embodiments of the present document may perform a control to prevent at least one object (the fifth object 602, the sixth object 604, the seventh object 606, and the eighth object 608) from being displayed on the second screen. According to various embodiments of the present disclosure, displaying of the object (e.g., the tenth object 1120) corresponding to the current battery residual amount (e.g., a percentage) may be performed by the processor (e.g., the processor 120 in FIG. 4B).

The electronic device 101 (e.g., the processor 120 in FIG. 4A) according to various embodiments of the present document may receive information related to battery charging from the processor (e.g., the processor 120 in FIG. 4A) when connection to the charging terminal 110 is confirmed. For example, a look-up table including information of an intensity of a supplied current, a battery residual amount, an estimated time to reach a specific residual amount, and an estimated time required to fully charge the battery may be stored in the electronic device (e.g., the memory 130 or the processor 120 in FIG. 1). The electronic device 101 (e.g., the processor 120 in FIG. 4A) according to various embodiments of the present document may determine an estimated charging time in the case of charging up to a specific battery residual amount, on the basis of the look-up table. The electronic device 101 (e.g., the processor 120 in FIG. 4A) according to various embodiments of the present document may provide information on the estimated charging time calculated by the processor (e.g., the processor 120 in FIG. 4A) and/or the look-up table to the display 400 (e.g., the object controller 406 in FIG. 4B). The display 400 (e.g., the object controller 406 in FIG. 4B) according to various embodiments of the present document may store the look-up table provided by the processor (e.g., the processor 120 in FIG. 4A) or information included in the look-up table, in a memory (not illustrated) of the object controller (e.g., the object controller 406 in FIG. 4B). When identification information indicating that the charging terminal 1100 has been connected is acquired from the processor (e.g., the processor 120 in FIG. 4A), the display 400 (e.g., the object controller 406 in FIG. 4B) according to various embodiments of the present document may check a time elapsed from the beginning of charging, using a clock signal generated by means of a clock generation circuit (e.g., the clock generation circuit 403 in FIG. 4B), so as to check a current battery charging level (e.g., a battery residual amount). The processor (e.g., the processor 120 in FIG. 4A), according to various embodiments of the present disclosure, may transmit, to the display, identification information indicating that the charging terminal 110 has been connected to the electronic device 101, and the look-up table or information of the look-up table, and then may perform switching to the second state.

Referring to 11D, illustrated is the case in which a designated amount of time has elapsed after the charging terminal 1100 is connected to the electronic device 101, and a battery residual amount is about 35%. The display (e.g., the object controller 406 in FIG. 4B), according to various embodiments of the present disclosure, may display an object (e.g., the eleventh object 1130) corresponding to a current battery residual amount on the second screen 620. According to various embodiments of the present disclosure, a value of distance A may be smaller than a value of distance B. According to various embodiments of the present disclosure, a value of diameter A may be smaller than a value of diameter B.

Image data of the objects 1110, 1120, 1130, 1140, 1150, 1160, and 1170 according to various embodiments of the present document may be pre-stored (e.g., at the time of manufacturing the electronic device 101) in the display (e.g., the object controller 406 or the graphics RAM 402 in FIG. 4B). Alternatively, the image data of the objects 1110, 1120, 1130, 1140, 1150, 1160, and 1170 according to various embodiments of the present document may be transmitted, by the processor (e.g., the processor 120 in FIG. 4A), to the display (e.g., the object controller 406 or the graphics RAM 402 in FIG. 4B) at the time of switching to the second state. Alternatively, the image data of the objects 1110, 1120, 1130, 1140, 1150, 1160, and 1170 according to various embodiments of the present document may be transmitted, by the processor (e.g., the processor 120 in FIG. 4A), to the display (e.g., the object controller 406 or the graphics RAM 402 in FIG. 4B) when connection to the charging terminal 1100 is confirmed.

FIGS. 11A, 11B, and 11C illustrate the case in which the electronic device is in a standby state (e.g., the second state). However, as described, descriptions provided in FIG. 11A to FIG. 11C may be applied to the case in which the power of the electronic device 101 is turned off. For example, in the case in which the power of the electronic device (e.g., the processor 120 in FIG. 4A) is turned off, when connection to the charging terminal 110 is confirmed, the processor (e.g., the processor 120 in FIG. 4A) may operate using power supplied from an external device. The processor (e.g., the processor 120 in FIG. 4A), according to various embodiments of the present disclosure, may transmit a look-up table and/or information of an estimated charging time calculated by the processor (e.g., the processor 120 in FIG. 4A) to the display (e.g., the display 400 in FIG. 4A and/or the display device 160 in FIG. 1), and the processor (e.g., the processor 120 in FIG. 4A) may enter the standby state. The display (e.g., the display 400 in FIG. 4A and/or the display device 160 in FIG. 1), according to various embodiments of the present disclosure, may check a battery charging level by checking a time elapsed from the beginning of charging (or when a notification that connection to the charging terminal 110 has been confirmed is received from the processor (e.g., the processor 120 in FIG. 4A)), using a clock signal generated by means of a clock generation circuit (e.g., the clock generation circuit 403 in FIG. 4B). The display (e.g., the display 400 in FIG. 4A and/or the display device 160 in FIG. 1), according to various embodiments of the present disclosure, may display at least one object 1110, 1120, 1130, 1140, 1150, 1160, or 1170 depending on a battery level.

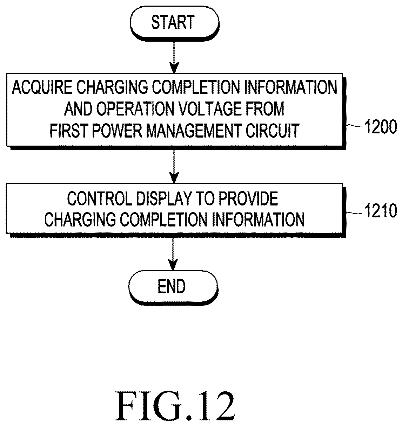

FIG. 12 illustrates an exemplary diagram for describing the method for operating an electronic device (e.g., the electronic device 101 in FIG. 1) according to various embodiments. FIG. 12 describes an operation of the case in which charging of the electronic device is completed. Operations described in FIG. 12 may be applied to not only the case in which the electronic device (e.g., the processor 120 in FIG. 4A) is in the second state, but also the case in which the power of the electronic device is turned off.

Referring to FIG. 12, the method for operating an electronic device (e.g., the electronic device 101 in FIG. 1), according to various embodiments of the present disclosure, may include acquiring charging completion information and an operation voltage from a first power management circuit (e.g., the first power management circuit 430 in FIG. 4A) by the electronic device (e.g., the processor 120 in FIG. 4A), in operation 1200. The operation voltage, according to various embodiments of the present disclosure, may include the voltage for a processor (e.g., the processor 120 in FIG. 4A) to wake up from a standby state.

The method for operating the electronic device (e.g., the electronic device 101 in FIG. 1), according to various embodiments of the present disclosure, may include controlling, by the electronic device (e.g., the processor 120 in FIG. 4A), a display (e.g., the display 400 in FIG. 4A and/or the display device 160 in FIG. 1) to provide charging completion information, in operation 1210. According to various embodiments of the present disclosure, when battery charging is completed, the processor (e.g., the processor 120 in FIG. 4A) may directly control the display (e.g., the display 400 in FIG. 4A and/or the display device 160 in FIG. 1).

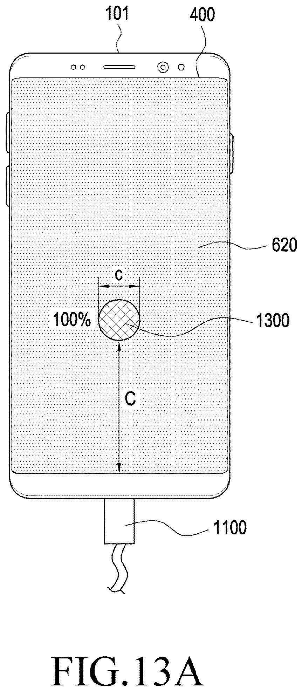

FIG. 13A illustrates an exemplary diagram for describing an operation for providing charging completion information when charging of an electronic device (e.g., the electronic device 101 in FIG. 1) is completed, according to various embodiments.

Referring to FIG. 13A, the electronic device 101 (e.g., the processor 120 in FIG. 4A), according to various embodiments of the present disclosure, may acquire identification information indicating that charging has been completed, from a power management circuit (e.g., the first power management circuit 430 in FIG. 4A) after the completion of charging (i.e., when it is confirmed that a battery residual is about 100%). The identification information indicating the completion of charging, according to various embodiments of the present disclosure, may include a wake-up signal for a processor (e.g., the processor 120 in FIG. 4A). The identification information, which indicates that charging has been completed, according to various embodiments of the present disclosure, may be provided together with the voltage for operating the processor (e.g., the processor 120 in FIG. 4A). According to various embodiments of the present disclosure, when a battery residual amount exceeds about 99% or is less than about 100%, the power management circuit (e.g., the first power management circuit 430 in FIG. 4A) may transmit, to the processor (e.g., the processor 120 in FIG. 4A), the identification information indicating that charging has been completed. In this case, when charging is completed, since the processor is already in a wake-up state, the processor (e.g., the processor 120 in FIG. 4A) may control a display (e.g., the display 400 in FIG. 4A and/or the display device 160 in FIG. 1) so that the fifteenth object 1170 is displayed on the display 400 (e.g., the display 400 in FIG. 4A and/or the display device 160 in FIG. 1). According to various embodiments of the present disclosure, after the completion of charging, when the processor (e.g., the processor 120 in FIG. 4A) acquires, from the power management circuit (e.g., the first power management circuit 430 in FIG. 4A), identification information indicating that charging has been completed, the display (e.g., the object controller 406 in FIG. 4A) first displays the fifteenth object 1170, and then when the processor (e.g., the processor 120 in FIG. 4A) is woken up, control authority for the display (e.g., the display 400 in FIG. 4A) may be transferred to the processor (e.g., the processor 120 in FIG. 4A). Descriptions related to FIG. 13A may be applied to both of a state in which power of an electronic device (e.g., the processor 120 in FIG. 4A) is in turned off and a state in which the electronic device is in a standby state. According to various embodiments of the present disclosure, a value of distance C may be larger than a value of distance A and a value of distance B. According to various embodiments of the present disclosure, a value of diameter c may be larger than a value of diameter a and a value of diameter b.

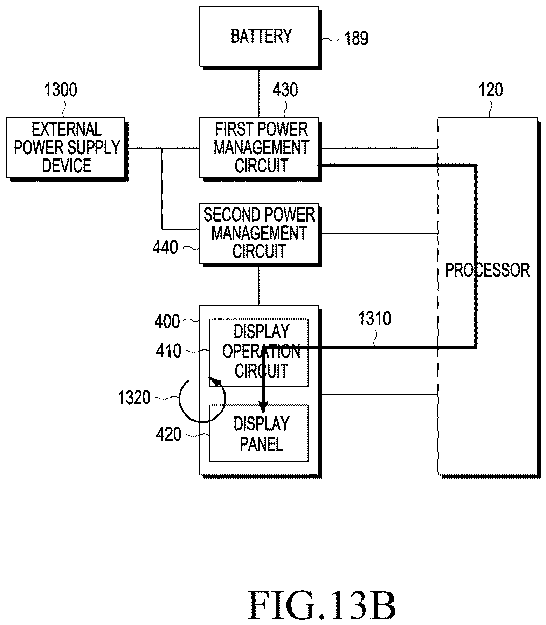

FIG. 13B illustrates an exemplary diagram for describing a control path of an object to be displayed while the electronic device 101 is being charged, according to the various embodiments. Descriptions related to FIG. 13B may be applied to both of a state in which power of an electronic device (e.g., the processor 120 in FIG. 4A) is in turned off and a state in which the electronic device is in a standby state.

Referring to FIG. 13B, the battery 189, according to various embodiments of the present disclosure, may receive power supplied from a power supply 1300. According to various embodiments of the present disclosure, power supplied from the power supply 1300 may be transmitted to the battery 189 via the first power management circuit 430. The processor 120, according to various embodiments of the present disclosure, may control the display driving circuit 410 and a display panel (e.g., the display panel 420 in FIG. 4A). The processor 120, according to various embodiments of the present disclosure, may transmit, to a display, a look-up table and/or information on an estimated charging time calculated by the processor 120, and may enter the standby state. Before the processor 120 according to various embodiments of the present disclosure enters the standby state, the processor 120 may control the display 400 (e.g., the display device 160 in FIG. 1) along path 1310.

After the processor 120 according to various embodiments of the present disclosure enters the standby state, the display driving circuit 410 may control the display 400 (e.g., the display device 160 in FIG. 1) along path 1320. According to various embodiments of the present disclosure, when charging of the battery 189 starts and then the battery is fully charged after a designated amount of time elapses or a battery residual amount is within a designated range (e.g., when the battery residual amount exceeds about 99% or is less than about 100%), the processor 120 may directly control the display 400 (e.g., the display device 160 in FIG. 1).

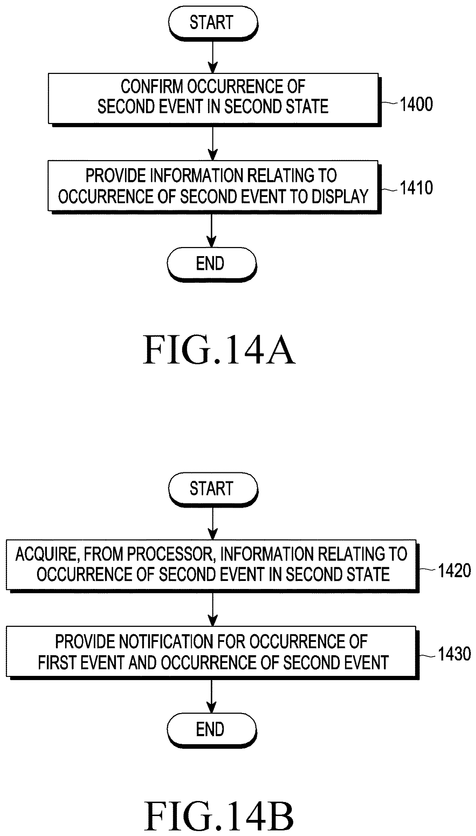

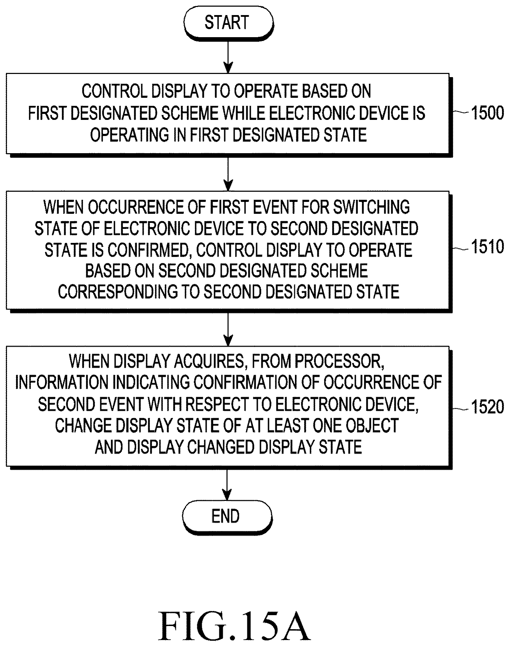

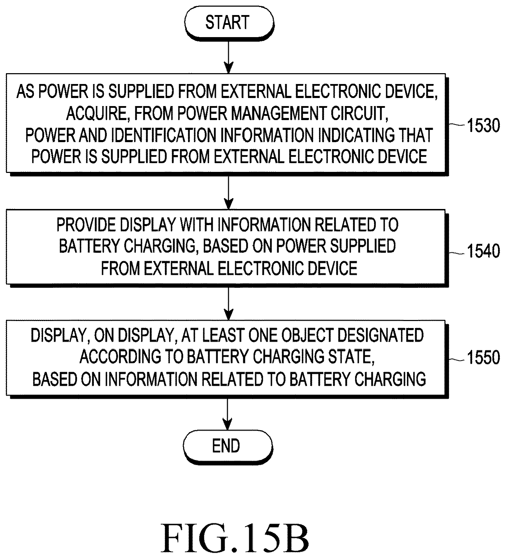

FIGS. 14A, 14B, 15A and 15B illustrate exemplary diagrams for describing the method for operating an electronic device (e.g., the electronic device 101 in FIG. 4B) according to various embodiments.

FIGS. 14A and FIG. 14B are exemplary diagrams for describing the case of an occurrence of a second event (e.g., an occurrence of a missing call) that is different from a first event (e.g., reception of an SNS message) while the first event is occurring, according to various embodiments of the present disclosure.

Referring to FIG. 14A, the method for operating an electronic device (e.g., the electronic device 101 in FIG. 1), according to various embodiments of the present disclosure, may include checking the second event in a second state of the electronic device (e.g., the processor 120 in FIG. 4A), in operation 1400. The second state, according to various embodiments of the present disclosure, may include a standby state. The electronic device (e.g., the processor 120 in FIG. 4A), according to various embodiments of the present disclosure, may be switched from the standby state to a wake-up state or an activated state when the occurrence of a new event is confirmed.

The method for operating the electronic device (e.g., the electronic device 101 in FIG. 1), according to various embodiments of the present disclosure, may include providing a display (e.g., the display 400 in FIG. 4A) with information relating to the occurrence of the second event, by the electronic device (e.g., the processor 120 in FIG. 4A) in operation 1410. The electronic device (e.g., the processor 120 in FIG. 4A), according to various embodiments of the present disclosure, may be switched to the standby state after operation 1410.

Referring to FIG. 14B, the method for operating the electronic device (e.g., the electronic device 101 in FIG. 1), according to various embodiments of the present disclosure may, include acquiring, from the processor, information relating to the occurrence of the second event in the second state by the electronic device (e.g., the display 400 in FIG. 4A), in operation 1420.

The method for operating the electronic device (e.g., the electronic device 101 in FIG. 1), according to various embodiments of the present disclosure, may include providing, by the electronic device (e.g., the display 400 in FIG. 4A), a notification of occurrences of the first event and the second event, in operation 1430. The notification, according to various embodiments of the present disclosure, may use a notification method based on various embodiments described in the present disclosure. For example, the electronic device (e.g., the display 400 in FIG. 4A) may perform a control so that both an indicator including an SNS representative icon and an indicator indicating a missing call are displayed in a flickering manner.

According to various embodiments of the present disclosure, when the second event occurs while a notification of the first event is being provided, the processor (e.g., the processor 120 in FIG. 4A) may be switched from the standby state to the wake-up state. In this case, a screen (e.g., a home screen) based on activation of the electronic device (e.g., the processor 120 in FIG. 4A) may be displayed instead of a standby screen (e.g., the second screen 620 in FIG. 6C).

Referring to FIG. 15A, the method for operating an electronic device (e.g., the electronic device 101 in FIG. 1), according to various embodiments of the present disclosure, may include controlling, in operation 1500 by the electronic device (e.g., the processor 120 in FIG. 4A), a display of the electronic device to operate (e.g., displaying a home screen or an execution screen of an application) according to a first designated scheme while the electronic device (e.g., the electronic device 101 in FIG.4A) is operating in a first designated state (e.g., an activated state).

The method for operating the electronic device (e.g., the electronic device 101 in FIG. 1), according to various embodiments of the present disclosure, may include controlling (e.g., displaying of a standby screen), by the electronic device (e.g., the processor 120 in FIG. 4A), the display to operate according to a second designated scheme corresponding to a second designated state (e.g., a standby state), in operation 1510, when the occurrence of a first event (e.g., pressing a power on/off key) for switching a state of the electronic device (e.g., the processor 120 in FIG. 4A) to the second designated state (e.g., a standby state) is confirmed.

The method for operating the electronic device (e.g., the electronic device 101 in FIG. 1), according to various embodiments of the present disclosure, may include, when the electronic device (e.g., the display 400 in FIG. 4A), i.e., the display (e.g., the display 400 in FIG. 4A), acquires information indicating confirmation of the occurrence of a second event (e.g., reception of an SNS message) with respect to the electronic device (e.g., the processor 120 in FIG. 4A) from a processor (e.g., the processor 120 in FIG. 4A), changing a display state of at least one object (e.g., the fifth object 602, the sixth object 604, the seventh object 606, and the eighth object 608) displayed on the display in the second designated state so as to display (e.g., displaying in a flickering manner) the at least one object by the display, in operation 1520.

Referring to FIG. 15B, the method for operating an electronic device (e.g., the electronic device 101 in FIG. 1), according to various embodiments of the present disclosure, may include, when power is applied from an external electronic device (e.g., the power supply 1300), acquiring the power and identification information indicating that power is supplied from the external electronic device, by the electronic device (e.g., the processor 120 in FIG. 4A) from the power management circuit (e.g., the first power management circuit 430 in FIG. 4A), in operation 1530.

The method for operating the electronic device (e.g., the electronic device 101 in FIG. 1), according to various embodiments of the present disclosure, may include providing, by the electronic device (e.g., the processor 120 in FIG. 4A), the display (e.g., the display 400 in FIG. 4A) with information (e.g., a look-up table, etc.) related to battery charging, on the basis of the power supplied from the external electronic device, in operation 1540.

The method for operating the electronic device (e.g., the electronic device 101 in FIG. 1), according to various embodiments of the present disclosure, may include displaying, by the electronic device (e.g., the display 400 in FIG. 4A), at least one object 1110, 1120, 1130, 1140, 1150, 1160, and 1170 designated according to a battery charging state on the display, in operation 1550, on the basis of the information (e.g., a look-up table, etc.) related to battery charging.

According to various embodiments of the present disclosure, at least one operation described in FIG. 15B may be performed by the electronic device (e.g., the processor 120 in FIG. 4A) in at least one state among the second state and an off state.

An electronic device (e.g., the electronic device 101 in FIG. 1), according to various embodiments of the present disclosure, may include: a housing; a display (e.g., the display device 160 in FIG. 1 and/or the display 400 in FIG. 4A) having at least a part thereof exposed and disposed on one surface of the housing; a power management circuit (e.g., the first power management circuit 430 in FIG. 4A) disposed inside the housing; and a processor (e.g., the processor 120 in FIG. 1) disposed inside the housing and operably connected to the display and the power management circuit, wherein the processor is configured to: control the display so that the electronic device performs operation based on a first designated scheme during operation in a first designated state; control the display so that the electronic device performs operation based on a second designated scheme corresponding to a second designated state when the occurrence of a first event for switching a state of the electronic device to the second designated state is confirmed; and control the power management circuit so as to receive a voltage lower than a voltage applied to the processor in the first state, and the display is configured to display at least one object in the second designated state, and to change and display a display state of the at least one object when information indicating confirmation of the occurrence of a second event with respect to the electronic device is acquired from the processor.

According to various embodiments of the present disclosure, the display may include a display panel (e.g., the display panel 420 in FIG. 4A) and a display driving circuit (e.g., the display driving circuit 410 in FIG. 4A), wherein the display driving circuit includes at least one among a timing controller (e.g., the timing controller 408 in FIG. 4B), an object controller (e.g., the object controller 406 in FIG. 4B), a power supply circuit (e.g., the power supply circuit 405 in FIG. 4B), and a clock generation circuit (e.g., the clock generation circuit 403 in FIG. 4B), and the object controller is configured to change a display state of the at least one object displayed on the display.

According to various embodiments of the present disclosure, the electronic device may further include another power management circuit (e.g., the second power management circuit 440 in FIG. 4A), wherein the other power management circuit is configured to supply the display with a voltage for operating the display, and the power management circuit is configured to supply the processor with a voltage for operating the processor.

According to various embodiments of the present disclosure, the first designated state may include a state in which the first power management circuit supplies a voltage exceeding a designated voltage to the processor, and the first designated scheme may include a scheme configured to display at least one screen among a home screen and an execution screen of a specific application according to a user input.

According to various embodiments of the present disclosure, the second designated scheme may include a scheme configured to display a standby screen on the display and to display the at least one object on the standby screen.

According to various embodiments of the present disclosure, the designated object may include at least one among a representative icon of an application related to the second event, an indicator including a color designated in relation to the application, a current time, a date, and a battery level of the electronic device.

According to various embodiments of the present disclosure, the object controller may be configured to cause all the designated objects to flicker or to cause only the indicator to flicker.

According to various embodiments of the present disclosure, the second event may include an event for charging a battery of the electronic device, wherein the processor is configured to provide information relating to an estimated charging time of the battery to the object controller when the event for charging the battery is confirmed.

According to various embodiments of the present disclosure, the second designated scheme may include a scheme configured to display a standby screen on the display and to display the at least one object on the standby screen, wherein the object controller is configured to display, on the standby screen, the at least one object designated differently depending on a level of the battery that is being charged.

A control method of an electronic device according to various embodiments of the present disclosure, the method may include: controlling a display of the electronic device so that the electronic device performs operation based on a first designated scheme during operation in a first designated state; controlling the display so that the electronic device performs operation based on a second designated scheme corresponding to a second designated state when the occurrence of a first event for switching a state of the electronic device to the second designated state is confirmed; controlling a power management circuit of the electronic device so as to receive a voltage lower than a voltage supplied to a processor of the electronic device in the first designated state; displaying at least one object on the display in the second designated state; and when information indicating the occurrence of a second event with respect to the electronic device is acquired from the processor, changing a display state of the at least one object and displaying the changed display state on the display.

An electronic device, according to various embodiments of the present disclosure, may include: a housing; a display having at least a part thereof exposed and disposed on one surface of the housing; a battery disposed inside the housing; a power management circuit disposed inside the housing and connected to the battery; and a processor disposed inside the housing and operably connected to the display, the battery, and the power management circuit, wherein the processor is configured to: as power is supplied from an external electronic device, acquire, from the power management circuit, the power and identification information indicating that power is supplied from the external electronic device; provide, to the display, information related to charging of the battery on the basis of the power supplied from the external electronic device; and control the power management circuit so that the processor receives a voltage equal to or lower than a designated voltage from the power management circuit, and the display is configured to display at least one object designated according to a charging state of the battery, on the basis of the provided information related to charging of the battery.

According to various embodiments of the present disclosure, the display may include a display panel and a display driving circuit, wherein the display driving circuit includes at least one among a timing controller, an object controller, a power supply circuit, and a clock generation circuit, and the object controller is configured to display at least one object on the display.

The electronic device according to various embodiments may be one of various types of electronic devices. The electronic devices may include, for example, a portable communication device (e.g., a smart phone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1 st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PLAY STORE), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

Although the present disclosure has been described with various embodiments, various changes and modifications may be suggested to one skilled in the art. It is intended that the present disclosure encompass such changes and modifications as fall within the scope of the appended claims.

## Claims

1. An electronic device (101) comprising:
a housing;
an always on display (400) disposed in the housing, wherein at least a part of the display (400) is exposed through one surface of the housing;
a power management circuit (430) disposed inside the housing; and
a processor (120) disposed inside the housing and operably connected to the display (400) and the power management circuit (430), wherein the processor (120) is configured to:
control the display (400) to operate based on a first designated scheme in a first designated state;
control the display (400) to operate based on a second designated scheme corresponding to a second designated state when an occurrence of a first event for switching a state of the electronic device (101) to the second designated state is confirmed; and
control the power management circuit (430) to supply to the processor (120), when in the second designated state, a voltage lower than a voltage supplied to the processor (120) in the first designated state, and
the display (400) is configured to:
display at least one object in the second designated state, and
change a display state of the at least one object and display the changed display state on the display (400) when information indicating confirmation of an occurrence of a second event with respect to the electronic device (101) is acquired from the processor (120);
wherein the changed display state includes flickering of the displayed at least one object, and
wherein the at least one object is displayed during a first time period and the at least one object is not displayed during a second time period, and wherein the second time period is longer than the first time period,
wherein the display (400) includes a display panel (420) and a signal driving circuit (410) comprising a source driver (409a) and a gate driver (409b), wherein the source driver and the gate driver are configured to output scan line signals and output data line signals to the display panel (200) and wherein a power consumption of the source driver (409a) and the gate driver (409b) is lower in the second time period than the first time period.

2. The electronic device (101) of claim 1, wherein:
the display driving circuit (410) further comprises:
at least one of a timing controller (408),
an object controller (406),
a power supply circuit (405), or
a clock generation circuit (403), and
the object controller (406) is configured to change the display state of the at least one object displayed on the display (400).

3. The electronic device (101) of claim 1, further comprising another power management circuit (440),
wherein the another power management circuit (440) is configured to supply the display (400) with a voltage.

4. The electronic device (101) of claim 1, wherein:
the first designated state includes a state in which the power management circuit (430) supplies a voltage exceeding a designated voltage to the processor (120), and
the first designated scheme includes a scheme configured to display at least one of a home screen or an execution screen of a specific application according to a user input.

5. The electronic device (101) of claim 1, wherein the second designated scheme includes a scheme configured to:
display a standby screen on the display (400), and
display the at least one object on the standby screen.

6. The electronic device (101) of claim 2, wherein the at least one object includes at least one of:
a representative icon of an application related to the second event,
an indicator including a color designated in relation to the application,
a current time,
a date, or
a battery level of the electronic device.

7. The electronic device (101) of claim 2, wherein:
the second event includes an event for charging a battery of the electronic device (101), and
the processor (120) is configured to provide information relating to an estimated charging time of the battery (189) to the object controller (406) when the event for charging the battery (189) is confirmed.

8. The electronic device (101) of claim 7, wherein:
the second designated scheme includes a scheme configured to:
display a standby screen on the display (400), and
display the at least one object on the standby screen; and
the object controller (406) is configured to display, on the standby screen, the at least one object designated differently depending on a level of the battery (189) that is being charged.

9. A computer-implemented method for controlling an electronic device, comprising:
controlling (500) an always on display of the electronic device to operate based on a first designated scheme in a first designated state;
controlling (510) the display to operate based on a second designated scheme corresponding to a second designated state when an occurrence of a first event for switching a state of the electronic device to the second designated state is confirmed;
controlling a power management circuit of the electronic device to supply to a processor of the electronic device, when in the second designated state, a voltage lower than a voltage supplied to the processor in the first designated state;
displaying (520) at least one object on the display in the second designated state; and
when information indicating confirmation (530) of an occurrence of a second event with respect to the electronic device is acquired from the processor, changing (540) a display state of the at least one object and displaying the changed display state on the display;
wherein the changed display state includes flickering of the displayed at least one object, and
wherein the at least one object is displayed during a first time period and the at least one object is not displayed during a second time period, and wherein the second time period is longer than the first time period,
wherein the display (400) includes a display panel (420) and a signal driving circuit (410) comprising a source driver (409a) and a gate driver (409b), wherein the source driver and the gate driver are configured to output scan line signals and output data line signals to the display panel (200) and wherein a power consumption of the source driver (409a) and the gate driver (409b) is lower in the second time period than the first time period.

10. The method of claim 9, wherein:
the display driving circuit further comprises at least one of a timing controller, an object controller, a power supply circuit, or a clock generation circuit, and
the method further comprises changing (560), by the object controller, a display state of the at least one object displayed on the display.

11. The method of claim 9, wherein the electronic device further comprises another power management circuit, further comprising:
supplying, by the another power management circuit, the display with a voltage.

12. The method of claim 9, wherein:
the first designated state includes a state in which the power management circuit supplies a voltage exceeding a designated voltage to the processor, and
controlling the display to operate based on the first designated scheme comprises displaying at least one screen of a home screen or an execution screen of a specific application according to a user input.

13. The method of claim 9, wherein controlling the display to operate based on the second designated scheme comprises displaying a standby screen on the display and to display the at least one object on the standby screen.

14. The method of claim 10, wherein the at least one object includes at least one of:
a representative icon of an application related to the second event,
an indicator including a color designated in relation to the application,
a current time,
a date, or
a battery level of the electronic device.

15. The method of claim 11, wherein:
the second event includes an event for charging a battery of the electronic device, and
the method further comprises providing information relating to an estimated charging time of the battery to the object controller when the event for charging the battery is confirmed.

## Patentansprüche

1. Elektronische Vorrichtung (101), umfassend:
ein Gehäuse;
eine ständig eingeschaltete Anzeige (400), die in dem Gehäuse angeordnet ist, wobei mindestens ein Teil der Anzeige (400) durch eine Oberfläche des Gehäuses freigelegt ist;
eine Leistungsverwaltungsschaltung (430), die im Inneren des Gehäuses angeordnet ist; und
einen Prozessor (120), der im Inneren des Gehäuses angeordnet und betreibbar mit der Anzeige (400) und der Leistungsverwaltungsschaltung (430) verbunden ist, wobei der Prozessor (120) zu Folgendem konfiguriert ist:
Steuern der Anzeige (400), sodass sie basierend auf einem ersten festgelegten Schema in einem ersten festgelegten Zustand betrieben wird;
Steuern der Anzeige (400), sodass sie basierend auf einem zweiten festgelegten Schema, das einem zweiten festgelegten Zustand entspricht, betrieben wird, wenn ein Auftreten eines ersten Ereignisses zum Umschalten eines Zustands der elektronischen Vorrichtung (101) auf den zweiten festgelegten Zustand bestätigt wird; und
Steuern der Leistungsverwaltungsschaltung (430), sodass sie dem Prozessor (120) in dem zweiten festgelegten Zustand eine Spannung zuführt, die niedriger ist als eine Spannung, die dem Prozessor (120) in dem ersten festgelegten Zustand zugeführt wird, und
die Anzeige (400) zu Folgendem konfiguriert ist:
Anzeigen mindestens eines Objekts in dem zweiten festgelegten Zustand und
Ändern eines Anzeigezustands des mindestens einen Objekts und Anzeigen des geänderten Anzeigezustands auf der Anzeige (400), wenn Informationen, die eine Bestätigung eines Auftretens eines zweiten Ereignisses in Hinblick auf die elektronische Vorrichtung (101) angeben, von dem Prozessor (120) erlangt werden;
wobei der geänderte Anzeigezustand ein Flackern des angezeigten mindestens einen Objekts einschließt und
wobei das mindestens eine Objekt während eines ersten Zeitraums angezeigt wird und das mindestens eine Objekt während eines zweiten Zeitraums nicht angezeigt wird und wobei der zweite Zeitraum länger als der erste Zeitraum ist,
wobei die Anzeige (400) ein Anzeigefeld (420) und eine Signaltreiberschaltung (410) einschließt, die einen Source-Treiber (409a) und einen Gate-Treiber (409b) umfasst, wobei der Source-Treiber und der Gate-Treiber zum Ausgeben von Abtastzeilensignalen und Ausgeben von Datenzeilensignalen an das Anzeigefeld (200) konfiguriert sind und wobei ein Leistungsverbrauch des Source-Treibers (409a) und des Gate-Treibers (409b) in dem zweiten Zeitraum niedriger ist als in dem ersten Zeitraum.

2. Elektronische Vorrichtung (101) nach Anspruch 1, wobei:
die Anzeigetreiberschaltung (410) ferner Folgendes umfasst:
mindestens eine von einer Zeitsteuervorrichtung (408),
einer Objektsteuervorrichtung (406),
einer Leistungszufuhrschaltung (405) oder
einer Takterzeugungsschaltung (403), und
die Objektsteuervorrichtung (406) zum Ändern des Anzeigezustands des mindestens einen auf der Anzeige (400) angezeigten Objekts konfiguriert ist.

3. Elektronische Vorrichtung (101) nach Anspruch 1, ferner umfassend eine andere Leistungsverwaltungsschaltung (440),
wobei die andere Leistungsverwaltungsschaltung (440) zum Zuführen einer Spannung zu der Anzeige (400) konfiguriert ist.

4. Elektronische Vorrichtung (101) nach Anspruch 1, wobei:
der erste festgelegte Zustand einen Zustand einschließt, in dem die Leistungsverwaltungsschaltung (430) dem Prozessor (120) eine Spannung zuführt, die eine festgelegte Spannung übersteigt, und
das erste festgelegte Schema ein Schema einschließt, das zum Anzeigen mindestens eines von einem Startbildschirm oder einem Ausführungsbildschirm einer spezifischen Anwendung gemäß einer Benutzereingabe konfiguriert ist.

5. Elektronische Vorrichtung (101) nach Anspruch 1, wobei das zweite festgelegte Schema ein Schema einschließt, das zu Folgendem konfiguriert ist:
Anzeigen eines Standby-Bildschirms auf der Anzeige (400) und
Anzeigen des mindestens einen Objekts auf dem Standby-Bildschirm.

6. Elektronische Vorrichtung (101) nach Anspruch 2, wobei das mindestens eine Objekt mindestens eines von Folgendem einschließt:
ein repräsentatives Symbol einer Anwendung, das auf das zweite Ereignis bezogen ist,
einen Indikator einschließlich einer in Bezug auf die Anwendung festgelegten Farbe,
eine aktuelle Zeit,
ein Datum oder
einen Batteriestand der elektronischen Vorrichtung.

7. Elektronische Vorrichtung (101) nach Anspruch 2, wobei:
das zweite Ereignis ein Ereignis zum Laden einer Batterie der elektronischen Vorrichtung (101) einschließt und
der Prozessor (120) zum Bereitstellen von Informationen bezüglich einer geschätzten Ladezeit der Batterie (189) an die Objektsteuervorrichtung (406) konfiguriert ist, wenn das Ereignis zum Laden der Batterie (189) bestätigt wird.

8. Elektronische Vorrichtung (101) nach Anspruch 7, wobei:
das zweite festgelegte Schema ein Schema einschließt, das zu Folgendem konfiguriert ist:
Anzeigen eines Standby-Bildschirms auf der Anzeige (400) und
Anzeigen des mindestens einen Objekts auf dem Standby-Bildschirm; und
die Objektsteuervorrichtung (406) zum Anzeigen des mindestens einen Objekts, das abhängig vom einem Stand der Batterie (189), die geladen wird, unterschiedlich festgelegt ist, auf dem Standby-Bildschirm konfiguriert ist.

9. Computerimplementiertes Verfahren zum Steuern einer elektronischen Vorrichtung, umfassend:
Steuern (500) einer ständig eingeschalteten Anzeige der elektronischen Vorrichtung, sodass sie basierend auf einem ersten festgelegten Schema in einem ersten festgelegten Zustand betrieben wird;
Steuern (510) der Anzeige, sodass sie basierend auf einem zweiten festgelegten Schema, das einem zweiten festgelegten Zustand entspricht, betrieben wird, wenn ein Auftreten eines ersten Ereignisses zum Umschalten eines Zustands der elektronischen Vorrichtung auf den zweiten festgelegten Zustand bestätigt wird;
Steuern einer Leistungsverwaltungsschaltung der elektronischen Vorrichtung, sodass sie einem Prozessor der elektronischen Vorrichtung in dem zweiten festgelegten Zustand eine Spannung zuführt, die niedriger ist als eine Spannung, die dem Prozessor in dem ersten festgelegten Zustand zugeführt wird;
Anzeigen (520) mindestens eines Objekts auf der Anzeige in dem zweiten festgelegten Zustand; und
wenn Informationen, die eine Bestätigung (530) eines Auftretens eines zweiten Ereignisses in Hinblick auf die elektronische Vorrichtung angeben, von dem Prozessor erlangt werden, Ändern (540) eines Anzeigezustands des mindestens einen Objekts und Anzeigen des geänderten Anzeigezustands auf der Anzeige;
wobei der geänderte Anzeigezustand ein Flackern des angezeigten mindestens einen Objekts einschließt und
wobei das mindestens eine Objekt während eines ersten Zeitraums angezeigt wird und das mindestens eine Objekt während eines zweiten Zeitraums nicht angezeigt wird und wobei der zweite Zeitraum länger als der erste Zeitraum ist,
wobei die Anzeige (400) ein Anzeigefeld (420) und eine Signaltreiberschaltung (410) einschließt, die einen Source-Treiber (409a) und einen Gate-Treiber (409b) umfasst, wobei der Source-Treiber und der Gate-Treiber zum Ausgeben von Abtastzeilensignalen und Ausgeben von Datenzeilensignalen an das Anzeigefeld (200) konfiguriert sind und wobei ein Leistungsverbrauch des Source-Treibers (409a) und des Gate-Treibers (409b) in dem zweiten Zeitraum niedriger ist als in dem ersten Zeitraum.

10. Verfahren nach Anspruch 9, wobei:
die Anzeigetreiberschaltung ferner mindestens eine von einer Zeitsteuervorrichtung, einer Objektsteuervorrichtung, einer Leistungszufuhrschaltung oder einer Takterzeugungsschaltung umfasst und
das Verfahren ferner Ändern (560) eines Anzeigezustands des mindestens einen auf der Anzeige angezeigten Objekts durch die Objektsteuervorrichtung umfasst.

11. Verfahren nach Anspruch 9, wobei die elektronische Vorrichtung ferner eine andere Leistungsverwaltungsschaltung umfasst, ferner umfassend:
Zuführen einer Spannung zu der Anzeige durch die andere Leistungsverwaltungsschaltung.

12. Verfahren nach Anspruch 9, wobei:
der erste festgelegte Zustand einen Zustand einschließt, in dem die Leistungsverwaltungsschaltung dem Prozessor eine Spannung zuführt, die eine festgelegte Spannung übersteigt, und
das Steuern der Anzeige, sodass sie basierend auf dem ersten festgelegten Schema betrieben wird, Anzeigen mindestens eines Bildschirms von einem Startbildschirm oder einem Ausführungsbildschirm einer spezifischen Anwendung gemäß einer Benutzereingabe umfasst.

13. Verfahren nach Anspruch 9, wobei das Steuern der Anzeige, sodass sie basierend auf dem zweiten festgelegten Schema betrieben wird, Anzeigen eines Standby-Bildschirms auf der Anzeige und Anzeigen des mindestens einen Objekts auf dem Standby-Bildschirm umfasst.

14. Verfahren nach Anspruch 10, wobei das mindestens eine Objekt mindestens eines von Folgendem einschließt:
ein repräsentatives Symbol einer Anwendung, das auf das zweite Ereignis bezogen ist,
einen Indikator einschließlich einer in Bezug auf die Anwendung festgelegten Farbe,
eine aktuelle Zeit,
ein Datum oder
einen Batteriestand der elektronischen Vorrichtung.

15. Verfahren nach Anspruch 11, wobei:
das zweite Ereignis ein Ereignis zum Laden einer Batterie der elektronischen Vorrichtung einschließt und
das Verfahren ferner Bereitstellen von Informationen bezüglich einer geschätzten Ladezeit der Batterie an die Objektsteuervorrichtung umfasst, wenn das Ereignis zum Laden der Batterie bestätigt wird.

## Revendications

1. Dispositif électronique (101) comprenant :
un boîtier ;
un affichage permanent (400) disposé dans le boîtier, dans lequel au moins une partie de l'affichage (400) est exposée à travers une surface du boîtier ;
un circuit de gestion de puissance (430) disposé à l'intérieur du boîtier ; et
un processeur (120) disposé à l'intérieur du boîtier et connecté de manière fonctionnelle à l'affichage (400) et au circuit de gestion de puissance (430), dans lequel le processeur (120) est configuré pour :
commander à l'affichage (400) de fonctionner sur la base d'un premier schéma désigné dans un premier état désigné ;
commander à l'affichage (400) de fonctionner sur la base d'un deuxième schéma désigné correspondant à un deuxième état désigné lorsque la survenue d'un premier événement pour commuter un état du dispositif électronique (101) vers le deuxième état désigné est confirmée ; et
commander au circuit de gestion de puissance (430) de fournir au processeur (120), lorsqu'il se trouve dans le deuxième état désigné, une tension inférieure à une tension fournie au processeur (120) dans le premier état désigné, et
l'affichage (400) est configuré pour :
afficher au moins un objet dans le deuxième état désigné, et
changer un état d'affichage de l'au moins un objet et afficher l'état d'affichage changé sur l'affichage (400) lorsque des informations indiquant la confirmation de la survenue d'un deuxième événement par rapport au dispositif électronique (101) sont acquises à partir du processeur (120)
dans lequel l'état d'affichage changé comprend un scintillement de l'au moins un objet affiché, et
dans lequel l'au moins un objet est affiché pendant une première période de temps et l'au moins un objet n'est pas affiché pendant une deuxième période de temps, et dans lequel la deuxième période de temps est plus longue que la première période de temps,
dans lequel l'affichage (400) comprend un panneau d'affichage (420) et un circuit de pilotage de signal (410) comprenant un pilote de source (409a) et un pilote de grille (409b), dans lequel le pilote de source et le pilote de grille sont configurés pour sortir des signaux de ligne de balayage et sortir des signaux de ligne de données vers le panneau d'affichage (200) et dans lequel une consommation de puissance du pilote de source (409a) et du pilote de grille (409b) est plus basse dans la seconde période que dans la première période.

2. Dispositif électronique (101) selon la revendication 1, dans lequel :
le circuit de pilotage d'affichage (410) comprend en outre :
au moins un contrôleur de synchronisation (408),
un contrôleur d'objet (406),
un circuit d'alimentation électrique (405), ou
un circuit de génération d'horloge (403), et
le contrôleur d'objet (406) est configuré pour changer l'état d'affichage de l'au moins un objet affiché sur l'affichage (400).

3. Dispositif électronique (101) selon la revendication 1, comprenant en outre un autre circuit de gestion de puissance (440),
dans lequel l'autre circuit de gestion de puissance (440) est configuré pour fournir une tension à l'affichage (400).

4. Dispositif électronique (101) selon la revendication 1, dans lequel :
le premier état désigné comprend un état dans lequel le circuit de gestion de puissance (430) fournit une tension dépassant une tension désignée au processeur (120), et
le premier schéma désigné comprend un schéma configuré pour afficher au moins l'un d'un écran d'accueil ou d'un écran d'exécution d'une application spécifique en fonction d'une entrée d'utilisateur.

5. Dispositif électronique (101) selon la revendication 1, dans lequel le second schéma désigné comprend un schéma configuré pour :
afficher un écran de veille sur l'affichage (400), et
afficher l'au moins objet sur l'écran de veille.

6. Dispositif électronique (101) selon la revendication 2, dans lequel l'au moins un objet comprend au moins l'un de :
une icône représentative d'une application liée au second événement,
un indicateur comprenant une couleur désignée en relation avec l'application,
une heure actuelle,
une date, ou
un niveau de batterie du dispositif électronique.

7. Dispositif électronique (101) selon la revendication 2, dans lequel :
le second événement comprend un événement pour charger une batterie du dispositif électronique (101), et
le processeur (120) est configuré pour fournir des informations relatives à un temps de charge estimé de la batterie (189) au contrôleur d'objet (406) lorsque l'événement de charge de la batterie (189) est confirmé.

8. Dispositif électronique (101) selon la revendication 7, dans lequel :
le second schéma désigné comprend un schéma configuré pour :
afficher un écran de veille sur l'affichage (400), et
afficher l'au moins un objet sur l'écran de veille ; et
le contrôleur d'objet (406) est configuré pour afficher, sur l'écran de veille, l'au moins un objet désigné différemment en fonction d'un niveau de la batterie (189) qui est en cours de charge.

9. Procédé mis en oeuvre par ordinateur pour commander un dispositif électronique, comprenant :
la commande (500) à un affichage permanent du dispositif électronique de fonctionner sur la base d'un premier schéma désigné dans un premier état désigné ;
la commande (510) à l'affichage de fonctionner sur la base d'un second schéma désigné correspondant à un second état désigné lorsque la survenue d'un premier événement pour commuter un état du dispositif électronique vers le second état désigné est confirmée ;
la commande à un circuit de gestion de puissance du dispositif électronique de fournir à un processeur du dispositif électronique, lorsqu'il se trouve dans le second état désigné, une tension inférieure à une tension fournie au processeur dans le premier état désigné ;
l'affichage (520) d'au moins un objet sur l'affichage dans le second état désigné ; et
lorsque des informations indiquant une confirmation (530) d'une survenue d'un second événement concernant le dispositif électronique sont acquises à partir du processeur, le changement (540) d'un état d'affichage de l'au moins un objet et l'affichage de l'état d'affichage changé sur l'affichage ;
dans lequel l'état d'affichage changé comprend un scintillement de l'au moins un objet affiché, et
dans lequel l'au moins un objet est affiché pendant une première période de temps et l'au moins un objet n'est pas affiché pendant une seconde période de temps, et dans lequel la seconde période de temps est plus longue que la première période de temps,
dans lequel l'affichage (400) comprend un panneau d'affichage (420) et un circuit de pilotage de signal (410) comprenant un pilote de source (409a) et un pilote de grille (409b), dans lequel le pilote de source et le pilote de grille sont configurés pour sortir des signaux de ligne de balayage et sortir des signaux de ligne de données vers le panneau d'affichage (200) et dans lequel une consommation de puissance du pilote de source (409a) et du pilote de grille (409b) est plus basse dans la seconde période que dans la première période.

10. Procédé selon la revendication 9, dans lequel :
le circuit de pilotage d'affichage comprend en outre au moins l'un d'un contrôleur de synchronisation, d'un contrôleur d'objet, d'un circuit d'alimentation électrique ou d'un circuit de génération d'horloge, et
le procédé comprend en outre le changement (560), par le contrôleur d'objet, d'un état d'affichage de l'au moins un objet affiché sur l'affichage.

11. Procédé selon la revendication 9, dans lequel le dispositif électronique comprend en outre un autre circuit de gestion de puissance, comprenant en outre :
la fourniture, par l'autre circuit de gestion de puissance, à l'affichage d'une tension.

12. Procédé selon la revendication 9, dans lequel :
le premier état désigné comprend un état dans lequel le circuit de gestion de puissance fournit au processeur une tension dépassant une tension désignée, et
la commande à l'affichage de fonctionner sur la base du premier schéma désigné comprend l'affichage d'au moins un écran d'un écran d'accueil ou d'un écran d'exécution d'une application spécifique en fonction d'une entrée d'utilisateur.

13. Procédé selon la revendication 9, dans lequel la commande à l'affichage de fonctionner sur la base du second schéma désigné comprend l'affichage d'un écran de veille sur l'affichage et l'affichage de l'au moins un objet sur l'écran de veille.

14. Procédé selon la revendication 10, dans lequel l'au moins un objet comprend au moins l'un de :
une icône représentative d'une application liée au second événement,
un indicateur comprenant une couleur désignée en relation avec l'application,
une heure actuelle,
une date, ou
un niveau de batterie du dispositif électronique.

15. Procédé selon la revendication 11, dans lequel :
le second événement comprend un événement pour charger une batterie du dispositif électronique, et
le procédé comprend en outre la fourniture d'informations relatives à un temps de charge estimé de la batterie au contrôleur d'objet lorsque l'événement de charge de la batterie est confirmé.
